# EUROPEAN PATENT SPECIFICATION

(11) **EP 4 509 376 B1**
(45) Date of publication and mention of the grant of the patent: **10.06.2026**
(21) Application number: 23722942.2
(22) Date of filing: 11.04.2023
(51) Int. Cl.: B60W 30/16

(54) **CONTROL DEVICE AND CONTROL METHOD FOR SADDLE RIDE VEHICLE**
STEUERUNGSVORRICHTUNG UND STEUERUNGSVERFAHREN FÜR SATTELFAHRZEUG
DISPOSITIF DE COMMANDE ET PROCÉDÉ DE COMMANDE POUR VÉHICULE À SELLE

(30) Priority: 11.04.2022 JP 2022064866
(43) Date of publication of application: 19.02.2025
(73) Proprietor: Robert Bosch GmbH, 70442 Stuttgart (DE)
(72) Inventor: MAURER, Thomas, Yokohama-shi, Kanagawa 224-8501 (JP); PFAU, Lars, Yokohama-shi, Kanagawa 224-8501 (JP)
(86) International application number: PCT/IB2023/053660
(87) International publication number: WO 2023/199200

(56) References cited:
- EP-A1- 3 800 099
- DE-A1- 102019 205 881
- US-B2- 10 730 516

## Description

### Technical Field

The present invention relates to a controller and a control method capable of executing an automatic speed following operation in group travel appropriately.

### Background Art

Various techniques for assisting with driving by a rider of a saddled vehicle have been proposed. For example, the following controller is disclosed in WO2018/197965. The controller acquires surrounding environment information that is information about environment around an ego vehicle and causes the ego vehicle to execute automatic acceleration/deceleration operation based on the surrounding environment information. US 10 730 516 B2 discloses a controller configured to execute a method to maneuver an ego vehicle that is a saddled vehicle, the controller comprising an execution section that is configured to execute an automatic speed following operation by controlling a longitudinal positional relationship, the longitudinal positional relationship that is a positional relationship between the ego vehicle and a target vehicle along a front-rear direction, the automatic speed following operation that is an operation in which a speed of the ego vehicle is adjusted according to a speed of the target vehicle so that the ego vehicle is maneuvered to follow the target vehicle automatically. The controller further comprises an acquisition section that is configured to acquire a lateral positional relationship information as information about a positional relationship between the ego vehicle and the target vehicle along a lateral direction. EP 3 800 099 A1 discloses a leaning vehicle configured to control acceleration in a vehicle forward direction based on the distance between a preceding vehicle and a host vehicle in a vehicle front-rear direction.

### Citation List

### Patent Literature

PTL 1: WO2018/197965
PTL2: US 10 730 516 B2
PTL 3: EP 3 800 099 A1

### Summary of Invention

### Technical Problem

As a technique for assisting with driving of a vehicle, an automatic speed following operation is available. In the automatic speed following operation, a positional relationship between the ego vehicle and a target vehicle along a front-rear direction is controlled so that a speed of the ego vehicle is adjusted according to a speed of the target vehicle and that the ego vehicle is maneuvered to follow the target vehicle automatically. It is considered to apply such automatic speed following operation to the saddled vehicle. Here, there is a case where two or more saddled vehicles travel in a group and make a group travel. Unlike other vehicles (for example, a passenger car, a truck, and the like), the saddled vehicle has a small body size, and a degree of freedom in a travel position thereof is high. Thus, it is necessary to appropriately execute the automatic speed following operation according to the positional relationship between the ego vehicle and the target vehicle.

The present invention has been made in view of the above-described background and therefore obtains a controller and a control method capable of executing an automatic speed following operation appropriately in a group travel. Solution to Problem

According to one aspect of the present invention, a controller configured to maneuver an ego vehicle that is a saddled vehicle comprises an execution section that is configured to execute an automatic speed following operation by controlling a longitudinal positional relationship, the longitudinal positional relationship is a positional relationship between the ego vehicle and a target vehicle along a front-rear direction, the automatic speed following operation is an operation in which a speed of the ego vehicle is adjusted according to a speed of the target vehicle so that the ego vehicle is maneuvered to follow the target vehicle automatically, the controller further comprises an acquisition section that is configured to acquire a lateral positional relationship information as information about a positional relationship between the ego vehicle and the target vehicle along a lateral direction. When a group ride mode, in which a plurality of saddled vehicles including the ego vehicle and the target vehicle travel in a group, is valid, the execution section, in the automatic speed following operation, executes a first operation mode in which the longitudinal positional relationship is adjusted to have an approaching tendency executing a reference setting process in which a passing time gap between the ego vehicle and the target vehicle is set to a reference passing time gap to control the longitudinal positional relationship between the ego vehicle and the target vehicle so that a distance between the ego vehicle and the target vehicle along the front-rear direction becomes a reference target distance, and a second operation mode in which the longitudinal positional relationship is adjusted to have a separating tendency executing a passing time gap adjusting process in which an adjusted passing time gap that is greater than the reference passing time gap is set to control the longitudinal positional relationship between the ego vehicle and the target vehicle so that the distance between the ego vehicle and the target vehicle along the front-rear direction becomes an increased target distance which is greater than the reference target distance that is the distance between the ego vehicle and the other vehicle along the front-rear direction. The execution section executes the first operation mode and the second operation mode based on the lateral positional relationship information.

According to one aspect of the present invention, a control method for maneuvering an ego vehicle that a saddled vehicle comprising: executing, using an execution section of a controller, an automatic speed following operation by controlling a longitudinal positional relationship, the longitudinal positional relationship that is a positional relationship between the ego vehicle and a target vehicle along a front-rear direction, the automatic speed following operation that is an operation in which a speed of the ego vehicle is adjusted according to a speed of the target vehicle so that the ego vehicle is maneuvered to follow the target vehicle automatically, the control method further comprising: acquiring, using an acquisition section of the controller, a lateral positional relationship information as information about a positional relationship between the ego vehicle and the target vehicle along a lateral direction. When a group ride mode, in which a plurality of saddled vehicles including the ego vehicle and the target vehicle travel in a group, is valid, the execution section, in the automatic speed following operation, executes a first operation mode in which the longitudinal positional relationship is adjusted to have an approaching tendency executing a reference setting process in which a passing time gap between the ego vehicle and the target vehicle is set to a reference passing time gap to control the longitudinal positional relationship between the ego vehicle and the target vehicle so that a distance between the ego vehicle and the target vehicle along the front-rear direction becomes a reference target distance; and a second operation mode in which the longitudinal positional relationship is adjusted to have a separating tendency executing a passing time gap adjusting process in which an adjusted passing time gap that is greater than the reference passing time gap is set to control the longitudinal positional relationship between the ego vehicle and the target vehicle so that the distance between the ego vehicle and the target vehicle along the front- rear direction becomes an increased target distance which is greater than the reference target distance that is the distance between the ego vehicle and the other vehicle along the front-rear direction becomes a reference target distance. The execution section executes the first operation mode and the second operation mode based on the lateral positional relationship information.

### Advantageous Effects of Invention

According to the present invention, when a group ride mode, in which a plurality of saddled vehicles including the ego vehicle and the target vehicle travel in a group, is valid, the execution section, in the automatic speed following operation, executes a first operation mode in which the longitudinal positional relationship is adjusted to have an approaching tendency and a second operation mode in which the longitudinal positional relationship is adjusted to have a separating tendency. The execution section executes the first operation mode and the second operation mode based on the lateral positional relationship information. In this way, it is possible to execute the automatic speed following operation appropriately in the group travel according to the lateral positional relationship information between the ego vehicle and the target vehicle.

Advantageous embodiments of the invention are laid down in the depended claims.

### Brief Description of Drawings

Fig. 1 is a schematic view illustrating an outline configuration of a saddled vehicle according to the present invention.
Fig. 2 is a block diagram illustrating an exemplary configuration of a controller according to the present invention.
Fig. 3 is a view illustrating a situation where a group of two or more saddled vehicles travels in a group.
Fig. 4 is a flowchart illustrating a control flow of an automatic speed following operation according to an embodiment.
Fig. 5 is a schematic view illustrating an example of lateral positional relationship information between an ego vehicle and a target vehicle.
Fig. 6 is a flowchart illustrating a control flow of an automatic speed following operation according to the embodiment.
Fig. 7 is a schematic view illustrating an example of the lateral positional relationship information between the ego vehicle and the target vehicle.
Fig. 8 is a view illustrating a situation where the group of two or more saddled vehicles travels in the group.
Fig. 9 is a flowchart illustrating a control flow of an automatic speed following operation according to the embodiment.

### Description of Embodiments

A description will hereinafter be made on a controller and a control method according to the present invention with reference to the drawings.

A configuration, operation, and the like, which will be described below, merely constitute one example, and the controller and the control method according to the present invention, which is defined in the appended claims, are not limited to a case with such a configuration, such operation, and the like.

The same or similar description will appropriately be simplified or will not be made below. In the drawings, the same or similar portions will be denoted by the same reference sign or will not be denoted by a reference sign. A detailed structure will appropriately be illustrated in a simplified manner or will not be illustrated.

The controller according to the present invention is adopted for a saddled vehicle. The saddled vehicle means a type of a vehicle on which an occupant straddles and is seated. Examples of the saddled vehicle are motorcycles (a two-wheeled motor vehicle and a three-wheeled motor vehicle), an all-terrain vehicle, and a pedal-driven vehicle. The motorcycle and the all-terrain vehicle are vehicles, each of which has an engine or an electric motor as a drive source, for example. The two-wheeled motor vehicle or the three-wheeled motor vehicle means the so-called motorcycle, and the motorcycles include a bike, a scooter, an electric scooter, and the like. The pedal-driven vehicle means a vehicle in general that can travel forward on a road by a depression force applied to pedals. Examples of the pedal-driven vehicle are a normal pedal-driven vehicle, an electrically-assisted pedal-driven vehicle, and an electric pedal-driven vehicle.

The following description will be made on a case where the engine is mounted as the drive source capable of outputting power for driving a wheel. However, as the drive source, a drive source other than the engine (for example, the electric motor) may be mounted, or the plural drive sources may be mounted.

A description will hereinafter be made on a controller according to an embodiment of the present invention.

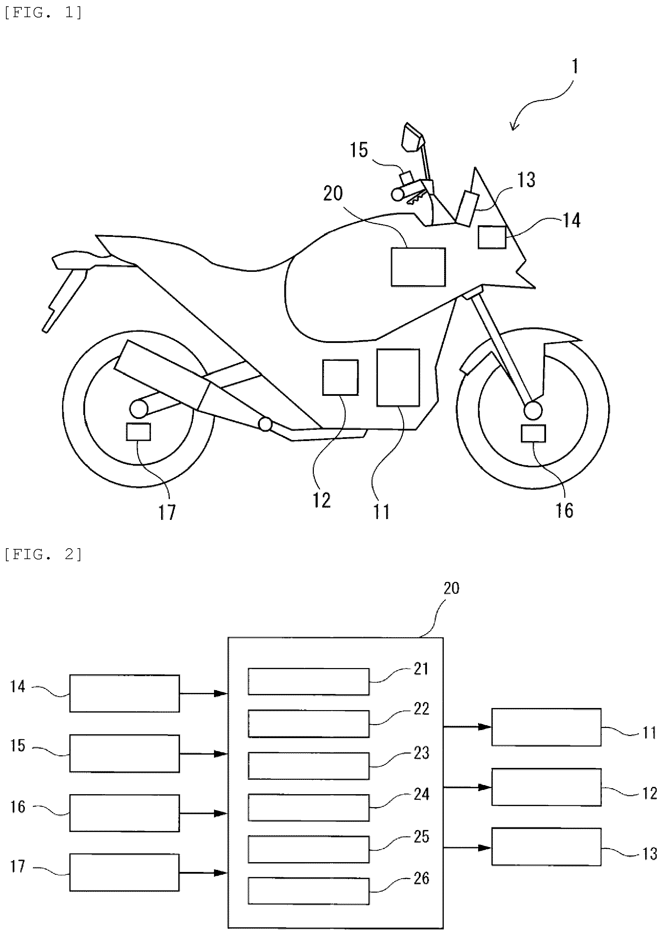

A description will be made on a configuration of a saddled vehicle 1 according to the present invention with reference to Fig. 1, Fig. 2, and Fig. 3.

Fig. 1 is a schematic view illustrating an outline configuration of the saddled vehicle 1. As illustrated in Fig. 1, the saddled vehicle 1 includes an engine 11, a hydraulic pressure control unit 12, a display device 13, a surrounding environment sensor 14, an input device 15, a front-wheel rotational frequency sensor 16, a rear-wheel rotational frequency sensor 17, and a controller (ECU) 20. In the following description, the saddled vehicle 1 will also be referred to as an ego vehicle 1.

The engine 11 corresponds to an example of the drive source of the saddled vehicle 1 and can output the power for driving the wheel. For example, the engine 11 includes: one or plural cylinders, each of which is formed with a combustion chamber therein; a fuel injector that injects fuel into the combustion chamber; and an ignition plug. When the fuel is injected from the fuel injector, air-fuel mixture containing air and the fuel is produced in the combustion chamber, and the air-fuel mixture is then ignited by the ignition plug and burned. Consequently, a piston provided in the cylinder reciprocates to cause a crankshaft to rotate. In addition, a throttle valve is provided to an intake pipe of the engine 11, and an intake air amount to the combustion chamber varies according to a throttle opening amount as an opening amount of the throttle valve.

The hydraulic pressure control unit 12 is a unit that has a function to control a braking force generated on the wheel. For example, the hydraulic pressure control unit 12 includes components (for example, a control valve and a pump) that are provided on an oil channel connecting a master cylinder and a wheel cylinder and control a brake hydraulic pressure in the wheel cylinder. The braking force generated on the wheel is controlled when operation of the components in the hydraulic pressure control unit 12 is controlled. The hydraulic pressure control unit 12 may control the braking force generated on each of a front wheel and a rear wheel or may only control the braking force generated on one of the front wheel and the rear wheel.

The display device 13 has a display function to display information visually. Examples of the display device 13 are a liquid-crystal display and a lamp.

The surrounding environment sensor 14 detects surrounding environment information about environment around the saddled vehicle 1. The surrounding environment sensor 14 is mounted to the saddled vehicle 1. For example, the surrounding environment sensor 14 is provided to a front portion, a lateral portion, or a rear portion of a trunk of the saddled vehicle 1. The surrounding environment sensor 14 detects environment information in front of, on a side of, or behind the saddled vehicle 1 as the surrounding environment information. Alternatively, for example, the surrounding environment sensor 14 may detect, as the surrounding environment information, at least two of the environment information in front of the saddled vehicle 1, the environment information on the side of the saddled vehicle 1, and the environment information behind the saddled vehicle 1. The saddled vehicle 1 is not limited to having the single surrounding environment sensor 14 but may be mounted with the plural surrounding environment sensors 14.

For example, a camera, which captures an image around the saddled vehicle 1, and a radar capable of detecting a distance from the saddled vehicle 1 to a target are used as the surrounding environment sensor 14. Alternatively, for example, the surrounding environment sensor 14 may be a Laser Imaging Detection and Ranging (LIDAR) sensor or an ultrasonic sensor. Further alternatively, for example, the surrounding environment sensor 14 may be a stereo camera.

The input device 15 accepts various operations by a rider. For example, the input device 15 is provided to a handlebar, and includes a push button and the like that are used for the rider's operation. Alternatively, the input device 15 may be included in the display device 13. More specifically, in this case, for example, the rider uses the liquid-crystal display of the display device 13 to perform the various operations according to the information that is displayed on the display device 13. Information about the rider's operation using the input device 15 is output to the controller 20.

The front-wheel rotational frequency sensor 16 is a wheel rotational frequency sensor that detects a rotational frequency of the front wheel (for example, a rotational frequency of the front wheel per unit time [rpm], a travel distance of the front wheel per unit time [km/h], or the like), and outputs a detection result. The front-wheel rotational frequency sensor 16 may detect another physical quantity that can substantially be converted to the rotational frequency of the front wheel. The front-wheel rotational frequency sensor 16 is provided to the front wheel.

The rear-wheel rotational frequency sensor 17 is a wheel rotational frequency sensor that detects a rotational frequency of the rear wheel (for example, the rotational frequency of the rear wheel per unit time [rpm], a travel distance of the rear wheel per unit time [km/h], or the like), and outputs a detection result. The rear-wheel rotational frequency sensor 17 may detect another physical quantity that can substantially be converted to the rotational frequency of the rear wheel. The rear-wheel rotational frequency sensor 17 is provided to the rear wheel.

Fig. 2 is a block diagram illustrating an exemplary configuration of the controller 20. As illustrated in Fig. 2, the controller 20 includes an execution section 21, an acquisition section 22, an identification section 23, a setting section 24, a determination section 25, and a calculation section 26, for example. In addition, the controller 20 communicates with each of the devices in the saddled vehicle 1.

The sections of the controller 20 may collectively be provided in a single casing or may separately be provided in plural casings. In addition, the controller 20 as a whole or some of the sections of the controller 20 may be a microcomputer, a microprocessor unit, or the like, may be one whose firmware and the like can be updated, or may be a program module or the like that is executed by a command from a CPU or the like, for example.

The execution section 21 executes various types of rider-assistance operation, which will be described below, by controlling operation of each of the devices in the saddled vehicle 1. For example, the execution section 21 controls the operation of the engine 11, the hydraulic pressure control unit 12, and the display device 13. For example, the execution section 21 can switch between validity and invalidity of each of the various types of the rider-assistance operation according to the rider's operation using the input device 15. Alternatively, the execution section 21 can automatically switch between the validity and the invalidity of each of the various types of the rider-assistance operation without relying on the rider's operation. For example, the execution section 21 controls the operation of each of the devices in the saddled vehicle 1 based on the surrounding environment information of the saddled vehicle 1 that is acquired by the acquisition section 22.

During travel of the saddled vehicle 1, the acquisition section 22 acquires the surrounding environment information of the saddled vehicle 1 based on output of the surrounding environment sensor 14. The surrounding environment information includes positional relationship information between the saddled vehicle 1 and a target that is positioned around the saddled vehicle 1 (for example, a vehicle, an obstacle, a road facility, a person, an animal, or the like). Examples of the positional relationship information are information about a relative position, a relative distance, a relative speed, relative acceleration, relative jerk, a passing time gap, and a predicted time until a collision. The positional relationship information may be information about another physical quantity that can substantially be converted to one of those.

For example, the execution section 21 executes an automatic speed following operation as the rider-assistance operation. In the automatic speed following operation, the execution section 21 controls a positional relationship between the saddled vehicle 1 and a saddled vehicle 2 along a front-rear direction so that a speed of the saddled vehicle 1 is adjusted according to a speed of the saddled vehicle 2 and that the saddled vehicle 1 is maneuvered to follow the saddled vehicle 2 automatically. In the following description, the saddled vehicle 1 will be referred to as the ego vehicle 1.

The execution section 21 can execute comfort brake assist (CBA) as one mode of the automatic speed following operation. In the CBA, the execution section 21 corrects excess or deficiency of an accelerating/decelerating operation by the rider of the ego vehicle 1 and then makes the ego vehicle 1 automatically follow a speed of a target vehicle.

In addition, the execution section 21 can execute adaptive cruise control (ACC) as another mode of the automatic speed following operation. In the ACC, the execution section 21 makes the ego vehicle 1 automatically follow the speed of the target vehicle without relying on the accelerating/decelerating operation by the rider of the ego vehicle 1. For example, the execution section 21 executes a vehicle-to-vehicle distance control to control a speed of the ego vehicle 1 such that a distance between the ego vehicle 1 and the target vehicle is maintained to a target distance. Here, the inter-vehicular distance is not limited to a linear distance between the ego vehicle 1 and the target vehicle along the front-rear direction of the ego vehicle 1. For example, the inter-vehicular distance may mean a distance in a direction along a lane. In other words, the direction along the lane is a direction along a travel lane of the ego vehicle 1. Alternatively, the inter-vehicular distance may be a distance between the ego vehicle 1 and the target vehicle in a diagonal direction that intersects with both of the front-rear direction and a right-left direction of the ego vehicle 1.

Furthermore, the execution section 21 can execute a passing time gap control as further another mode of the automatic speed following operation. For example, the execution section 21, in the passing time gap control, may executes a first operation mode and a second operation mode, which will be described below. More specifically, in the passing time gap control, the execution section 21 controls the positional relationship between the ego vehicle 1 and the target vehicle along the front-rear direction by changing the passing time gap between the ego vehicle 1 and the target vehicle.

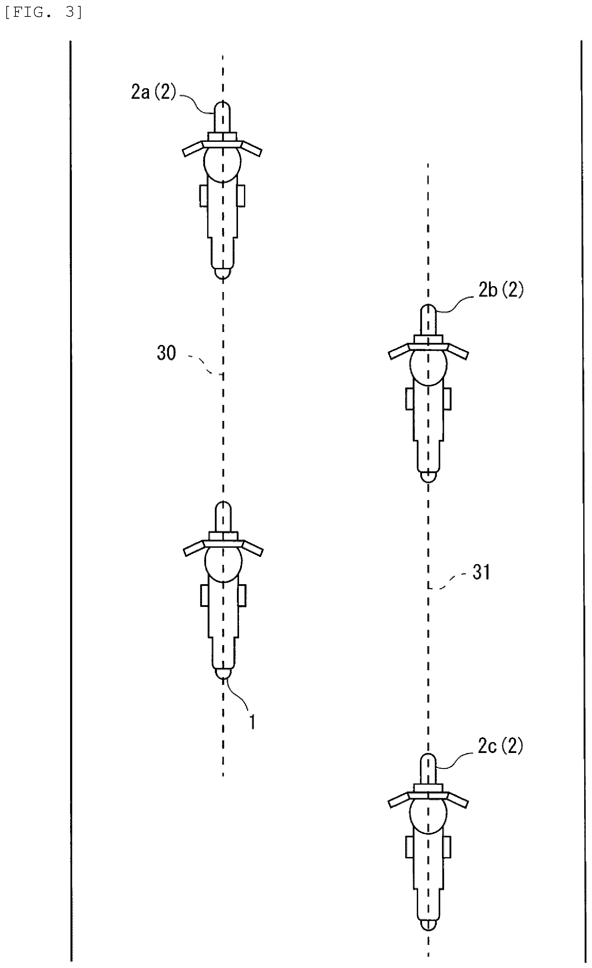

Here, there is a case where the ego vehicle 1 and a plurality of saddled vehicles 2 travel in a group and move by a group travel. A description will be made on an overview of the group travel with reference to Fig. 3.

Fig. 3 is a view illustrating a situation where the group including the ego vehicle 1 and the saddled vehicles 2 travels in the group. Fig. 3 illustrates some saddled vehicles 2a, 2b, 2c of the saddled vehicles 2. That is, the saddled vehicles 2 are the saddled vehicles other than the ego vehicle 1 in the group. In the following description, the saddled vehicles 2a, 2b, 2c will respectively be referred to as other vehicles 2a, 2b, 2c.

As illustrated in Fig. 3, in the group travel, the saddled vehicles 2 travel in two vehicle lines that are a first vehicle line 30 and a second vehicle line 31 in the same lane, for example. According to an example shown in Fig. 3, the first vehicle line 30 and the second vehicle line 31 are indicated by broken lines. According to the example illustrated in Fig. 3, the ego vehicle 1 and the other vehicle 2a form the first vehicle line 30. The ego vehicle 1 and the other vehicle 2a are aligned in this order from the front along the front-rear direction. Meanwhile, the other vehicles 2b, 2c form the second vehicle line 31. The other vehicle 2b and the other vehicle 2c are aligned in this order from the front along the front-rear direction.

According to the example illustrated in Fig. 3, the saddled vehicles, which form the first vehicle line 30, and the saddled vehicles, which form the second vehicle line 31, travel in the group by making a formation in an alternate arrangement (that is, a zigzag arrangement) along the front-rear direction. However, the arrangement of the formation is not limited to the zigzag arrangement. For example, such a formation may be made that the other vehicle 2a and the other vehicle 2b line up laterally and the ego vehicle 1 and the other vehicle 2c line up laterally at positions behind the other vehicles 2a, 2b along the front-rear direction.

In the group travel, in order to maintain the formation, the automatic speed following operation has to be executed appropriately. For this reason, the execution section 21 can execute a group ride mode as one mode of the automatic speed following operation. The group ride mode is a mode of the automatic speed following operation that is particularly suited for the group travel.

Each of the above-described modes of the automatic speed following operation can be combined appropriately and executed simultaneously. For example, the execution section 21 can execute the ACC together with the passing time gap control. For example, the execution section 21 executes the ACC to execute the vehicle-to-vehicle distance control in which the distance between the ego vehicle 1 and the target vehicle is kept while the execution section 21 executes the passing time gap control to control a positional relationship between the ego vehicle 1 and a position identification target vehicle, which is another vehicle other than the target vehicle to be followed, along the front-rear direction.

In addition, for example, the execution section 21 can combine the group ride mode and the passing time gap control for execution. According to the present disclosure, when the group ride mode is valid, the passing time gap control is executed. For example, the execution section 21, in the passing time gap control, executes the first operation mode or the second operation mode in each of which a longitudinal positional relationship is controlled. The longitudinal positional relationship is the positional relationship between the ego vehicle 1 and the target vehicle along the front-rear direction. For example, according to an example shown in Fig. 3, the execution section 21 executes the group ride mode to execute the vehicle-to-vehicle distance control in which the distance between the ego vehicle 1 and the target vehicle (e.g., the other vehicle 2a) is kept while the execution section 21 executes the passing time gap control to control the positional relationship between the ego vehicle 1 and the position identification target vehicle (e.g., the other vehicle 2b), which is another vehicle other than the target vehicle to be followed, along the front-rear direction. However, the passing time gap control is not limited to be executed when the group ride mode is valid.

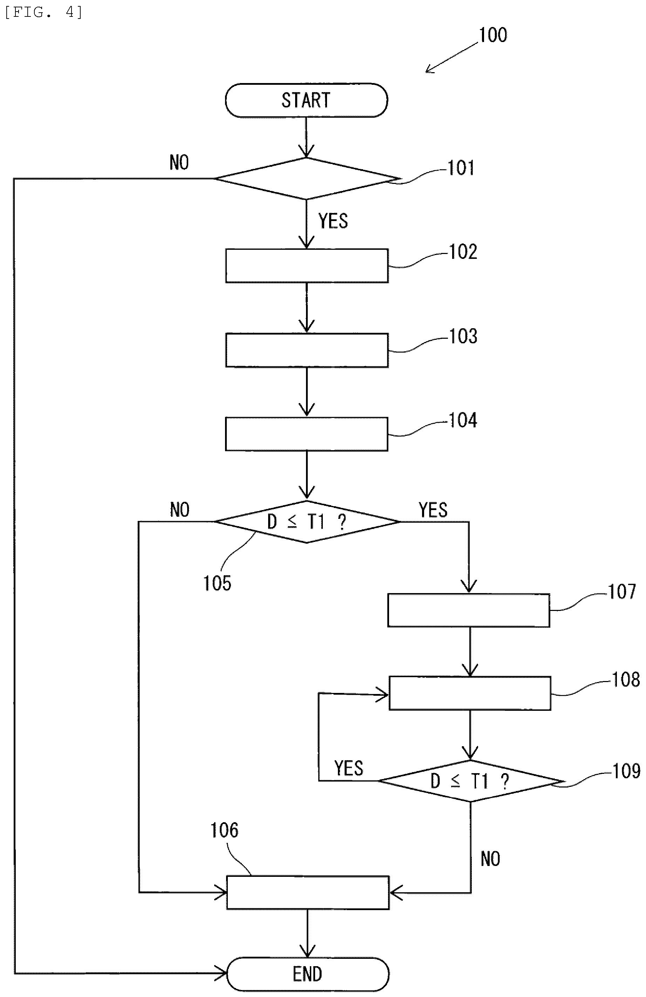

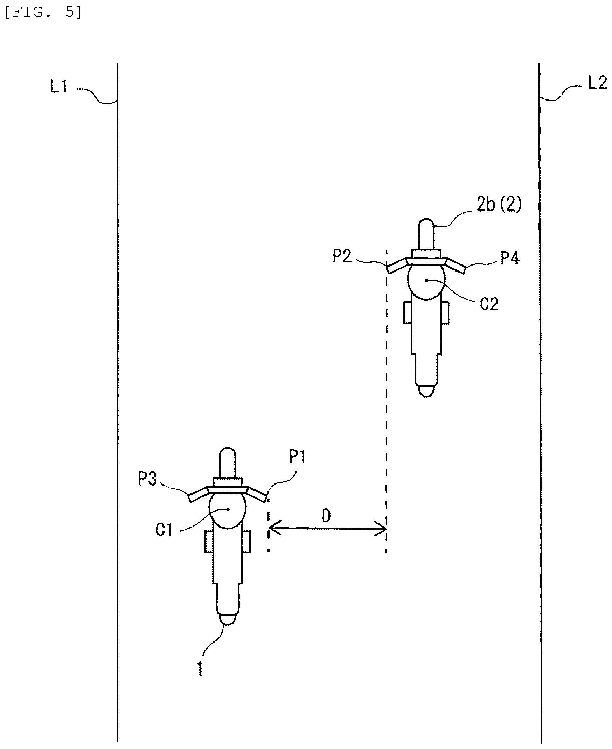

A description will hereinafter be made on the passing time gap control by the controller 20 according to a first example with reference to Fig. 4 and Fig. 5. According to a first example, the passing time gap control is executed when the group ride mode is valid.

Fig. 4 is a flowchart illustrating a control flow 100 of the automatic speed following operation according to the first example. The control flow 100 illustrated in Fig. 4 is repeatedly executed at a time interval, which is set in advance, for example.

When the control flow 100 is initiated, the control flow to step 101.

At step 101, the execution section 21 executes a mode identification process in which it is determined whether the group ride mode is currently executed. For example, when the group ride mode is automatically enabled as one mode of the automatic speed following operation, the execution section 21 may determine that the group ride mode is currently executed based on an output from the controller 20. Alternatively, for example, when the group ride mode is enabled by an operation by a rider using the input device 15, the execution section 21 may determine that the group ride mode is currently executed based on an output from the input device 15. For example, the execution section 21, in the mode identification process, may have the identification section 23 identify whether the group ride mode is currently executed.

When it is determined, at step 101, that the group ride mode is currently executed (step 101: YES), the control flow 100 advances to step 102. When it is determined, at step 101, that the group ride mode is not currently executed (step 101: NO), the control flow 100 is terminated.

At step 102, the execution section 21 executes a target setting process in which the target vehicle for the passing time gap control is set. While the passing time gap control is executed, the execution section 21 controls the longitudinal positional relationship between the ego vehicle 1 and the target vehicle based on a lateral positional relationship information that is information about the positional relationship between the ego vehicle 1 and the target vehicle along the lateral direction. The execution section 21, in the target setting process, may have the setting section 24 set the target vehicle. According to the present disclosure, the target vehicle for the passing time gap control will also be referred to as the position identification target vehicle.

According to the example of the group travel illustrated in Fig. 3, when the other vehicle 2b approaches the ego vehicle 1 laterally, the other vehicle 2b possibly collides with the ego vehicle 1. As such, the execution section 21 sets, as the position identification target vehicle which is the target vehicle in the passing time gap control, the other vehicle 2b, a distance of which from the ego vehicle 1 in a travel direction of the ego vehicle 1 is the shortest among the saddled vehicles 2. Accordingly, when the execution section 21 executes the vehicle-to-vehicle distance control in a condition where the group ride mode is valid so that the ego vehicle 1 follows the other vehicle 2a as the target vehicle to follow, the longitudinal positional relationship between the ego vehicle 1 and the other vehicle 2b is controlled based on the lateral positional relationship information, and the collision between the ego vehicle 1 and the other vehicle 2b is thereby avoided while the ego vehicle 1 follows the other vehicle 2a. In this way, the execution section 21 can suppress a collision between the ego vehicle 1 and the other vehicle 2b that may occur when the other vehicle 2b approaches a travel path of the ego vehicle 1 or enters into the travel path of the ego vehicle 1. In the following description, the other vehicle 2b, as the position identification target vehicle, will be referred to as a target vehicle 2b.

The ACC and the passing time gap control can be executed in combination when the group ride mode is invalid. As an example, the execution section 21 may set the other vehicle 2a as the target vehicle to follow, e.g., in the ACC, and may set the other vehicle 2b as the position identification target vehicle in the passing time gap control. As an example, when the CBA and the passing time gap control are executed in combination, the execution section 21 may set the other vehicle 2a as the target vehicle to follow, e.g., in the CBA, and may set the other vehicle 2b as the position identification target vehicle in the passing time gap control. In other words, the execution section 21 may execute the ACC and/or the CBA, for example, to make the ego vehicle 1 automatically follow the other vehicle 2a, which is the target vehicle to follow, at substantially the same speed as the other vehicle 2a while executing the passing time gap control to control the positional relationship between the ego vehicle 1 and the other vehicle 2b, which is the position identification target vehicle, along the front-rear direction.

When the target vehicle is set at step 102, the control flow 100 advances to step 103.

At step 103, the execution section 21 executes a reference setting process in which a reference passing time gap is set. The execution section 21 maintains a passing time gap between the ego vehicle 1 and the target vehicle 2b as the target vehicle to the reference passing time gap, and thereby maintains a distance between the ego vehicle 1 and the target vehicle along the front-rear direction to a reference target distance. For example, the execution section 21, in the reference setting process, may have the setting section 24 set the reference passing time gap.

When the reference passing time gap is set at step 103, the control flow 100 advances to step 104.

At step 104, the acquisition section 22 acquires the lateral positional relationship information between the ego vehicle 1 and the target vehicle 2b. According to the first example, the acquisition section 22 acquires, as the lateral positional relationship information, a lateral distance D that is a distance between the ego vehicle 1 and the target vehicle 2b along the lateral direction.

Fig. 5 is a schematic view illustrating an example of the lateral distance D between the ego vehicle 1 and the target vehicle 2b. According to the example illustrated in Fig. 5, the lateral distance D is a lateral distance between an end P1 on a side of the ego vehicle 1 facing the target vehicle 2b and an end P2 on a side of the target vehicle 2b facing the ego vehicle 1.

Alternatively, for example, the lateral distance D may be a lateral distance between the end P1 of the ego vehicle 1 and a center C2 of the target vehicle 2b along the lateral direction. Further alternatively, for example, the lateral distance D may be a lateral distance between the end P1 of the ego vehicle 1 and an end P4 on an opposite side of the target vehicle 2b from the ego vehicle 1. Further alternatively, the lateral distance D may be a lateral distance between a center C1 of the ego vehicle 1 along the lateral direction and any one of the center C2, the end P2, and the end P4 of the target vehicle 2b. Further alternatively, for example, the lateral distance D may be a lateral distance between an end P3 on an opposite side of the ego vehicle 1 from the target vehicle 2b and any one of the center C2, the end P2, and the end P4 of the target vehicle 2b.

The lateral distance D may be a distance that is actually measured by the surrounding environment sensor 14 or may be a distance that is converted based on another physical quantity to be substantially the same distance as the lateral distance D. In addition, the lateral positional relationship information between the ego vehicle 1 and the target vehicle 2b may be any of various physical quantities that can be converted to the lateral distance D. An example of the physical quantity that can be converted to the lateral distance D is the distance between the ego vehicle 1 and the target vehicle 2b in the diagonal direction that intersects with both of the front-rear direction and the right-left direction of the ego vehicle 1. Alternatively, the lateral distance D may be a predicted distance that is calculated based on a predicted swept path. The predicted swept path is a swept path that is predicted to be followed by the ego vehicle 1. Further alternatively, the lateral distance D may be a predicted distance that is calculated based on the predicted swept path of the ego vehicle 1 and a predicted swept path of the target vehicle 2b. The predicted swept path of the target vehicle 2b is a swept path that is predicted to be followed by the target vehicle 2b. When the predicted distance is calculated, for example, a yaw rate of the ego vehicle 1, a roll angle of the ego vehicle 1, or the surrounding environment information of the saddled vehicles 2 that are positioned in front of the ego vehicle 1 may be taken into consideration. In addition, for example, when the ego vehicle 1 goes around a curve, or when it is predicted that the ego vehicle 1 enters the curve, the predicted distance may be calculated based on a radius of curvature of the curve.

The lateral distance D can also be acquired by a combination of the above-described examples.

When the lateral distance D is acquired at step 104, the control flow 100 advances to step 105.

According to the first example, the lateral positional relationship information between the ego vehicle 1 and the target vehicle 2b is the lateral distance D. According to the first example, the execution section 21, in the passing time gap control, executes the first operation mode or the second operation mode based on a comparison result of comparing the lateral distance D with a first threshold value T1.

More specifically, at step 105, the execution section 21 executes a determination process in which it is determined whether the lateral distance D is smaller than or equal to the first threshold value T1. When the lateral distance D is determined not to be smaller than or equal to the first threshold value T1, i.e., when the lateral distance D is determined to be larger than the first threshold value T1 at step 105 (step 105: NO), the control flow 100 advances to step 106. When the lateral distance D is determined to be smaller than or equal to the first threshold value T1 at step 105 (step 105: YES), the control flow 100 advances to step 107. In the following descriptions, it is explained that the execution section 21, at step 105, determines whether the lateral distance D is smaller than or equal to the first threshold value T1. However, the execution section 21, at step 105, can determine whether the lateral distance D is smaller than the first threshold value T1. That is, the control flow 100 may advance to step 106 when the lateral distance D is determined to be larger than or equal to the first threshold value T1 at step 105 and may advance to step 107 when the lateral distance D is determined to be smaller than the first threshold value T1 at step 105. The execution section 21, in the determination process, may have the determination section 25 determine whether the lateral distance D is smaller than or equal to the first threshold value T1. The execution section 21, in the determination process, may have the determination section 25 determine whether the lateral distance D is smaller than the first threshold value T1.

In the first example, a case where the lateral positional relationship information between the ego vehicle 1 and the target vehicle 2b is information indicating that the ego vehicle 1 and the target vehicle 2b are located away from each other along the lateral direction is a case where the lateral distance D is larger than the first threshold value T1. The case where the lateral distance D is larger than the first threshold value T1 means that the ego vehicle 1 and the target vehicle 2b are sufficiently away from each other along the lateral direction, and there is a low possibility of contact between the ego vehicle 1 and the target vehicle 2b. Thus, when the lateral distance D is determined not smaller than or equal to the first threshold value T1 (step 105: NO), that is, when the lateral distance D is larger than the first threshold value T1, the control flow 100 advances to step 106.

At step 106, the execution section 21 executes the first operation mode in which the longitudinal positional relationship between the ego vehicle 1 and the target vehicle 2b has an approaching tendency. More specifically, the execution section 21, in the first operation mode, executes a reference setting process in which the passing time gap between the ego vehicle 1 and the target vehicle 2b is set to the reference passing time gap. In other words, the execution section 21, at step 106, maintains the reference passing time gap that is set at step 103. In this way, the execution section 21 executes the first operation mode to control the longitudinal positional relationship between the ego vehicle 1 and the target vehicle 2b so that the distance between the ego vehicle 1 and the target vehicle 2b along the front-rear direction becomes the reference target distance.

The case where the longitudinal positional relationship between the ego vehicle 1 and the target vehicle 2b has the approaching tendency means that the distance between the ego vehicle 1 and the target vehicle 2b along the front-rear direction in the first operation mode becomes shorter than that in the second operation mode since the reference passing time gap is set in the first operation mode.

When the first operation mode is executed at step 106, the control flow 100 is terminated.

Meanwhile, according to the first example, a case where the lateral positional relationship information between the ego vehicle 1 and the target vehicle 2b is information indicating that the ego vehicle 1 and the target vehicle 2b are located close to each other along the lateral direction is a case where the lateral distance D is smaller than or equal to the first threshold value T1. When the lateral distance D between the ego vehicle 1 and the target vehicle 2b is reduced, the ego vehicle 1 and the other vehicle 2b possibly come into contact with each other. Accordingly, when the lateral distance D is determined to be smaller than or equal to the first threshold value T1 at step 105 (step 105: YES), the control flow 100 advances to step 107.

At step 107, the execution section 21 executes the second operation mode in which the longitudinal positional relationship between the ego vehicle 1 and the target vehicle 2b has a separating tendency.

Specifically, the execution section 21, in the second operation mode, executes a passing time gap adjusting process in which an adjusted passing time gap that is greater than the reference passing time gap is set. The execution section 21 executes the second operation mode to control the longitudinal positional relationship between the ego vehicle 1 and the target vehicle 2b so that the distance between the ego vehicle 1 and the target vehicle 2b along the front-rear direction becomes an increased target distance. The increased target distance is greater than the reference target distance that is the distance between the ego vehicle 1 and the other vehicle 2b along the front-rear direction and that is maintained by the reference passing time gap. Thus, by changing the passing time gap from the reference passing time gap to the adjusted passing time gap, the longitudinal positional relationship between the ego vehicle 1 and the target vehicle 2b has the separating tendency. That is, the distance between the ego vehicle 1 and the target vehicle 2b along the front-rear direction is increased. The execution section 21, in the passing time gap adjusting process, may have the setting section 24 set the adjusted passing time gap.

According to the present invention the case where the longitudinal positional relationship between the ego vehicle 1 and the target vehicle 2b has the separating tendency means that, since the adjusted passing time gap is set in the second operation mode, the distance between the ego vehicle 1 and the target vehicle 2b along the front-rear direction becomes longer than that in the first operation mode.

The adjusted passing time gap may be a unique fixed value that is set in advance for the execution of the control flow 100. Alternatively, for example, the adjusted passing time gap may be one of fixed values that can appropriately be selected by the rider in any of the various modes (e.g., the ACC, the CBA, the group ride mode, etc.) of the automatic speed following operation. Further alternatively, for example, the adjusted passing time gap may be a value that is substantially converted based on various parameters based on the lateral distance D, so as to dynamically match a current value of the distance between the ego vehicle 1 and the target vehicle 2b along the front-rear direction.

In a case where any of the various modes of the automatic speed following operation is combined with the passing time gap control, a distance between the ego vehicle 1 and the other vehicle 2a along the front-rear direction may be increased, e.g., when the ego vehicle 1 and the target vehicle 2b are located close to each other along the lateral direction. On the other hand, when the ego vehicle 1 and the target vehicle 2b are located away from each other along the lateral direction, it is also possible to reduce the distance between the ego vehicle 1 and the other vehicle 2a along the front-rear direction. In this way, it is possible to prevent an unnecessary increase in the distance between the ego vehicle 1 and the other vehicle 2a along the front-rear direction and thus is possible to further appropriately maintain the formation of the group travel.

When in the second operation mode is executed at step 107, the control flow 100 advances to step 108. A control process at step 108 is substantially the same as the control process at step 104. That is, at step 108, the acquisition section 22 acquires the lateral distance D between the ego vehicle 1 and the target vehicle 2b along the lateral direction. When the acquisition section 22 acquires the lateral distance D at step 108, the control flow 100 advances to step 109.

A control process at step 109 is substantially the same as the control process at step 105. That is, at step 109, the execution section 21 executes the determination process in which it is determined whether the lateral distance D is smaller than or equal to the first threshold value T1. When the lateral distance D is determined to be smaller than or equal to the first threshold value T1 at step 109 (step 109: YES), the control flow 100 returns to step 108, and the lateral distance D is acquired again. The control processes at step 108 and at step 109 are repeated until the lateral distance D exceeds the first threshold value T1. The execution section 21 may execute the determination process in which it is determined whether the lateral distance D is smaller than the first threshold value T1. In this case, the control flow 100 can advance to step 106 when the lateral distance D is determined to be larger than or equal to the first threshold value T1 at step 109. The control flow 100 can return to step 108 when the lateral distance D is determined to be smaller than the first threshold value T1 at step 109.

When the lateral distance D exceeds the first threshold value T1, it can be determined that the ego vehicle 1 and the target vehicle 2b separate from each other along the lateral direction. That is, it is determined that there is the low possibility of the contact between the ego vehicle 1 and the target vehicle 2b. Thus, if it is determined at step 109 that the lateral distance D is not smaller than or equal to the first threshold value T1 (step 109: NO), the control flow 100 advances to step 106.

While the control processes at step 108 and at step 109 are repeated until the lateral distance D exceeds the first threshold value T1, the passing time gap between the ego vehicle 1 and the target vehicle 2b is kept at the adjusted passing time gap that is set at step 107. Here, when the control flow 100 advances from step 109 to step 106, the execution section 21 executes the first operation mode in which the longitudinal positional relationship between the ego vehicle 1 and the target vehicle 2b is adjusted to have the approaching tendency. More specifically, the execution section 21 sets the passing time gap between the ego vehicle 1 and the target vehicle 2b to the reference passing time gap. As a result, the execution section 21 returns the passing time gap between the ego vehicle 1 and the target vehicle 2b from the adjusted passing time gap, which is set at step 107, to the reference passing time gap. That is, the execution section 21 shortens the distance between the ego vehicle 1 and the target vehicle 2b along the front-rear direction from the increased target distance to the reference target distance.

When the passing time gap is set to the reference passing time gap at step 106, the control flow 100 is terminated.

According to the first example, when the first operation mode is executed at step 106, the control flow 100 is terminated. However, when the passing time gap is set to the reference passing time gap at step 106, the control flow 100 may return to step 101, and it may be identified again whether the group ride mode is currently executed. Alternatively, when the passing time gap is set to the reference passing time gap at step 106, the control flow 100 may return to step 104, and the lateral distance D may be acquired again. In this case, the control processes at step 104 and at step 105 may be repeated until the lateral distance D becomes smaller than or equal to the first threshold value.

A description will hereinafter be made on effects of the first example.

According to the first example, when the lateral distance D is smaller than or equal to the first threshold value T1, the execution section 21 sets the passing time gap to be the adjusted passing time gap and controls the longitudinal positional relationship between the ego vehicle 1 and the target vehicle 2b so that the distance between the ego vehicle 1 and the target vehicle 2b along the front-rear direction becomes the increased target distance. As a result, when the ego vehicle 1 and the target vehicle 2b approach each other along the lateral direction, it is possible to prevent the collision between the ego vehicle 1 and the target vehicle 2b by increasing the distance between the ego vehicle 1 and the target vehicle 2b along the front-rear direction.

On the other hand, when the lateral distance D is larger than the first threshold value T1, the execution section 21 sets the passing time gap to be the reference passing time gap and controls the longitudinal positional relationship between the ego vehicle 1 and the target vehicle 2b so that the distance between the ego vehicle 1 and the target vehicle 2b along the front-rear direction becomes the reference target distance. As a result, it is possible to prevent the unnecessary increase in the distance between the ego vehicle 1 and the other vehicle 2b along the front-rear direction and thus to prevent breakage of the formation of the group travel.

The execution section 21 may execute the second operation mode to change the passing time gap from the reference passing time gap to the adjusted passing time gap immediately after the lateral distance D is determined to be smaller than or equal to the first threshold value T1. As a result, the distance between the ego vehicle 1 and the target vehicle 2b along the front-rear direction can be changed promptly. Therefore, it is possible to avoid the collision between the ego vehicle 1 and the target vehicle 2b.

The execution section 21 may execute the second operation mode to change the passing time gap from the reference passing time gap to the adjusted passing time gap when the lateral distance D remains to be smaller than or equal to the first threshold value T1 over a specified time. As another example, the execution section 21 may change the passing time gap back to the reference passing time gap from the adjusted passing time gap when the lateral distance D remains to be larger than the first threshold value T1 over the specified time. As a result, it is possible to prevent a change in the distance between the ego vehicle 1 and the target vehicle 2b along the front-rear direction from occurring frequently and thus to improve stability of the automatic speed following operation.

According to the first example, the acquisition section 22 acquires the lateral distance D as the lateral positional relationship information. However, the acquisition section 22 may acquire, as the lateral positional relationship information, information that indicates whether the ego vehicle 1 and the target vehicle 2b overlap each other along the lateral direction. In this case, the execution section 21, at step 105 and/or step 109, may execute a determination process in which it is determined whether the ego vehicle 1 and the target vehicle 2b overlap each other along the lateral direction. For example, when it is determined, at step 105, that the ego vehicle 1 and the target vehicle 2b overlap each other along the lateral direction, the execution section 21, at step 107, may change the passing time gap to be the increased passing time gap. As another example, when it is determined, at step 109, that the ego vehicle 1 and the target vehicle 2b do not overlap each other along the lateral direction, the execution section 21, at step 110, may change the passing time gap back to the reference passing time gap from the increased passing time gap. In this way, when there is the high possibility of the collision between the ego vehicle 1 and the target vehicle 2b, the collision can be avoided by adjusting the passing time gap. The execution section 21, at step 105 and/or step 109, may have the determination section 25 determine whether the ego vehicle 1 and the target vehicle 2b overlap each other along the lateral direction.

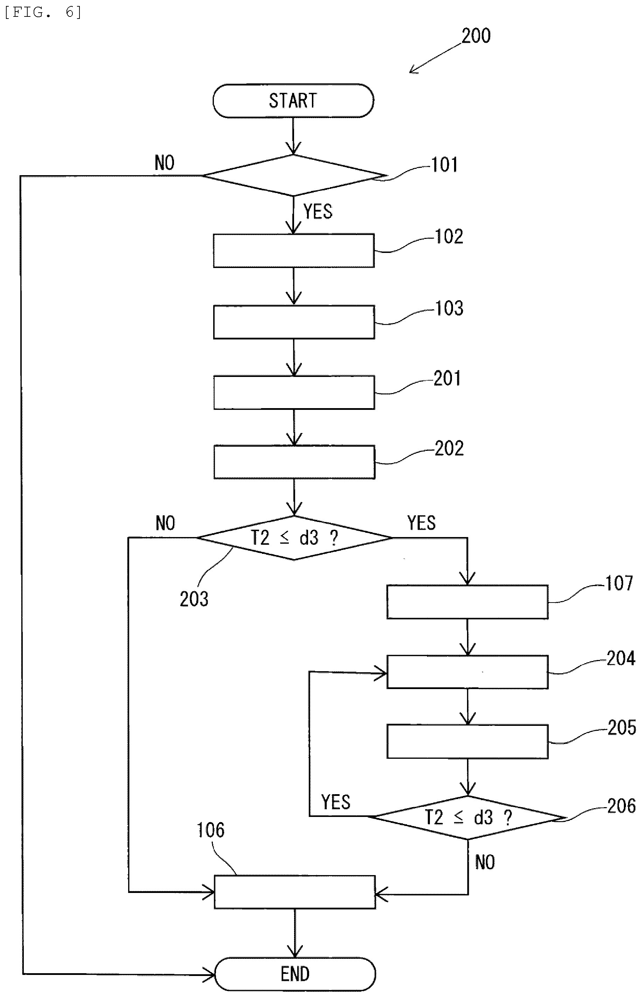

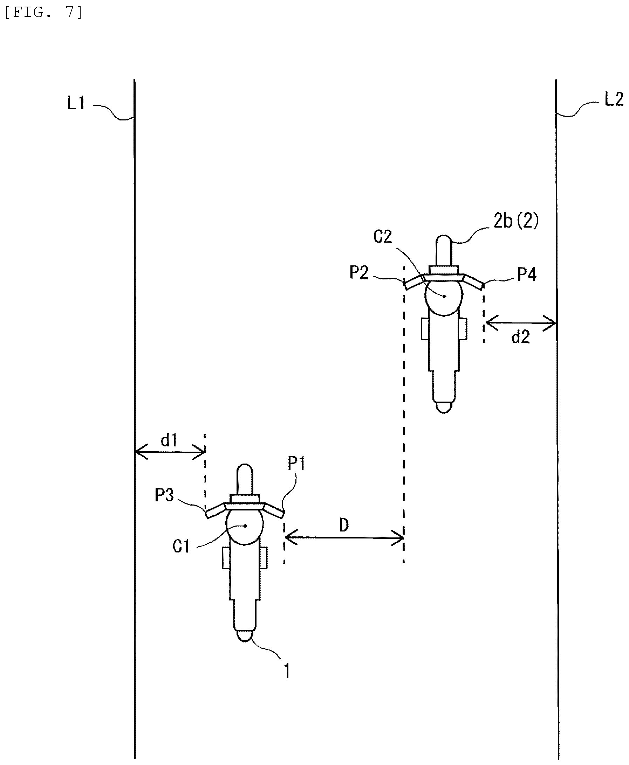

A control operated by the controller 20 according to a second example of the present disclosure will be described hereafter with reference to Fig. 6 and Fig. 7.

Fig. 6 is a flowchart illustrating a control flow 200 of the automatic speed following operation according to the second example. In Fig. 6, of control process in the control flow 200, the control process that is common to the control process in the control flow 100 according to the first example will be denoted by the same reference sign, and an overlapping description thereon will not be made.

Fig. 7 is a schematic view illustrating an example of the lateral positional relationship information between the ego vehicle 1 and the target vehicle 2b.

In the control flow 200 illustrated in Fig. 6, control processes at step 201 and at step 202 are executed instead of the control process at step 104 of the control flow 100 illustrated in Fig. 4, and a control process at step 203 is executed instead of the control process at step 105 of the control flow 100. In addition, control processes at step 204 and at step 205 are executed instead of the control process at step 108 of the control flow 100 illustrated in Fig. 4, and a control process at 206 is executed instead of the control process at step 109 of the control flow 100. The control processes at step 204, at step 205, and at step 206 of the control flow 200 are substantially the same as the control processes at step 201, at step 202, and at step 203 of the control flow 200, respectively.

According to the second example, the acquisition section 22 acquires, as the lateral positional relationship information between the ego vehicle 1 and the target vehicle 2b, a first distance d1 related to the ego vehicle 1 and a second distance d2 related to the target vehicle 2b. The execution section 21 executes the first operation mode or the second operation mode based on a comparison result of comparing a reference distance d3 with a second threshold value T2. The reference distance d3 is a distance that is calculated by adding up the first distance d1 and the second distance d2.

More specifically, at step 201, the acquisition section 22 acquires the first distance d1 and the second distance d2.

A first lane marker L1 and a second lane marker L2 therebetween define a travel lane in which second lane marker L2 and the target vehicle 2b travel. The first distance d1 is a distance between the ego vehicle 1 and one lane marker along the lateral direction. The one lane marker is one of the first lane marker L1 and the second lane marker L2 that is closer to the ego vehicle 1. The second distance d2 is a distance between the target vehicle 2b and another lane marker along the lateral direction. The other lane marker is the other one of the first lane marker L1 and the second lane marker L2 that is closer to the target vehicle 2b.

Fig. 7 illustrates an example in which a distance between the end P3 of the ego vehicle 1 and the first lane marker L1 along the lateral direction is acquired as the first distance d1 and in which a distance between the end P4 of the target vehicle 2b and the second lane marker L2 along the lateral direction is acquired as the second distance d2. However, the first distance d1 only needs to be a distance between a part of the ego vehicle 1 and the first lane marker L1 along the lateral direction. For example, the first distance d1 may be a distance between the center C1 or the end P1 of the ego vehicle 1 and the first lane marker L1. Similarly, the second distance d2 only needs to be a distance between a part of the target vehicle 2b and the second lane marker L2 along the lateral direction. For example, the second distance d2 may be a distance between the center C2 or the end P2 of the target vehicle 2b and the second lane marker L2. Each of the first distance d1 and the second distance d2 may be a distance that is actually measured by the surrounding environment sensor 14 or may be a distance that is substantially converted based on another physical quantity.

When the first distance d1 and the second distance d2 are acquired at step 201, the control flow 200 advances to step 202.

At step 202, the execution section 21 executes a calculation process in which the reference distance d3 is calculated by adding up the first distance d1 and the second distance d2 (d3 = d1 + d2). The reference distance d3 corresponds to the lateral positional relationship information between the ego vehicle 1 and the target vehicle 2b according to the present disclosure. As the reference distance d3 is increased, the lateral distance D between the ego vehicle 1 and the target vehicle 2b along the lateral direction is reduced. That is, it means that, as the reference distance d3 is increased, the ego vehicle 1 and the target vehicle 2b are positioned closer to each other along the lateral direction. The execution section 21 may have the calculation section 26 calculate the reference distance d3 in the calculation process.

When the reference distance d3 is calculated at step 202, the control flow 200 advances to step 203.

At step 203, the execution section 21 executes a determination process in which it is determined whether the reference distance d3 is larger than or equal to the second threshold value T2. When it is determined, at step 203, that the reference distance d3 is not larger than or equal to the second threshold value T2 (step 203: NO), the control flow 200 advances to step 106. When it is determined, at step 203, that the reference distance d3 is larger than or equal to the second threshold value T2 (step 203: YES), the control flow 200 advances to step 107. The execution section 21, at step 203, may execute a determination process in which it is determined whether the reference distance d3 is larger than the second threshold value T2. That is, the control flow 200 may advance to step 106 when it is determined, at step 203, that the reference distance d3 is smaller than or equal to the second threshold value T2, and the control flow 200 may advance to step 107 when it is determined, at step 203, that the reference distance d3 is larger than the second threshold value T2. The execution section 21, in the determination process, may have the determination section 25 determine whether the reference distance d3 is larger than or equal to the second threshold value T2.

According to the second example, the case where the lateral positional relationship information between the ego vehicle 1 and the target vehicle 2b is the information indicating that the ego vehicle 1 and the target vehicle 2b are located away from each other along the lateral direction is a case where the reference distance d3 is smaller than the second threshold value T2. The case where the reference distance d3 is smaller than the second threshold value T2 means that the ego vehicle 1 and the target vehicle 2b are located away from each other along the lateral direction, and it can be determined that there is the low possibility of the collision between the ego vehicle 1 and the target vehicle 2b. Thus, when it is determined, at step 203, that the reference distance d3 is not larger than or equal to the second threshold value T2 (step 203: NO), the control flow 200 advances to step 106.

When it is determined, at step 203, that the reference distance d3 is not larger than or equal to the second threshold value T2 (step 203: NO), the execution section 21, at step 106, sets the passing time gap to be the reference passing time gap by executing the first operation mode in which the longitudinal positional relationship between the ego vehicle 1 and the target vehicle 2b is adjusted to have the approaching tendency.

When the first operation mode is executed at step 106, the control flow 200 is terminated.

According to the second example, the case where the lateral positional relationship information between the ego vehicle 1 and the target vehicle 2b is the information indicating that the ego vehicle 1 and the target vehicle 2b are located close to each other along the lateral direction is a case where the reference distance d3 is larger than or equal to the second threshold value T2. As the reference distance d3 increases, the distance between the ego vehicle 1 and the target vehicle 2b along the lateral direction shortens. When the distance between the ego vehicle 1 and the target vehicle 2b along the lateral direction shortens, possibility of collision occurring between the ego vehicle 1 and the target vehicle 2b may increase. Accordingly, when it is determined, at step 203, that the reference distance d3 is larger than or equal to the second threshold value T2 (step 203: YES), the control flow 200 advances to step 107, and the execution section 21 executes the second operation mode to adjust the passing time gap. More specifically, the execution section 21, at step 107, changes the passing time gap from the reference passing time gap to the adjusted passing time gap.

When the passing time gap is adjusted at step 107, the control flow 200 advances to step 204.

At step 204, the acquisition section 22 acquires the first distance d1 and the second distance d2. When the first distance d1 and the second distance d2 are acquired at step 204, the control flow 200 advances to step 205. The execution section 21, at step 205, executes the calculation process in which the reference distance d3 is calculated. When the reference distance d3 is calculated at step 205, the control flow 200 advances to step 206. The execution section 21, at step 205, may have the calculation section 26 calculate the reference distance d3 in the calculation process.

At step 206, the execution section 21 executes the determination process in which it is determined whether the reference distance d3 is larger than or equal to the second threshold value T2. When it is determined, at step 206, that the reference distance d3 is smaller than the second threshold value T2 (step 206: NO), the control flow 200 advances to step 106. At step 106, the execution section 21 executes the second operation mode to change the passing time gap back to the reference passing time gap. When the first operation mode is executed at step 106, the control flow 200 is terminated. The execution section 21, at step 206, may execute the determination process in which it is determined whether the reference distance d3 is larger than the second threshold value T2. That is, the control flow 200 may advance to step 106 when it is determined, at step 206, that the reference distance d3 is smaller than or equal to the second threshold value T2. The execution section 21, at step 206, may have the determination section 25 determine whether the reference distance d3 is larger than or equal to the second threshold value T2 in the determination process. The execution section 21, at step 206, may have the determination section 25 determine whether the reference distance d3 is larger than the second threshold value T2 in the determination process.

When it is determined, at step 206, that the reference distance d3 is larger than or equal to the second threshold value T2 (step 206: YES), the control flow 200 returns to step 204. The control processes at step 204, at step 205, and at step 206 are repeated until the reference distance d3 falls below the second threshold value T2. When the execution section 21, at step 206, executes the determination process in which it is determined whether the reference distance d3 is larger than the second threshold value T2, the control flow 200 may return to step 204 when it is determined, at step 206, that the reference distance d3 is larger than the second threshold value T2.

A description will hereinafter be made on effects of the second example.

According to the second example, the acquisition section 22 acquires the first distance d1 and the second distance d2 based on the first lane marker L1 and the second lane marker L2. The execution section 21 executes the calculation process to calculate the reference distance d3 which is a sum of the first distance d1 and the second distance d2 and identifies the positional relationship between the ego vehicle 1 and the target vehicle 2b along the lateral direction based on the reference distance d3. In this way, it is possible to prevent the collision between the ego vehicle 1 and the target vehicle 2b while maintaining the formation of the group travel inside the travel lane.

The reference distance d3 is not limited to the distance that is calculated by adding up the first distance d1 and the second distance d2. The reference distance d3 only needs to be a physical quantity than can be converted to the lateral distance D between the ego vehicle 1 and the target vehicle 2b. For example, the reference distance d3 may be an average value of the first distance d1 and the second distance d2.

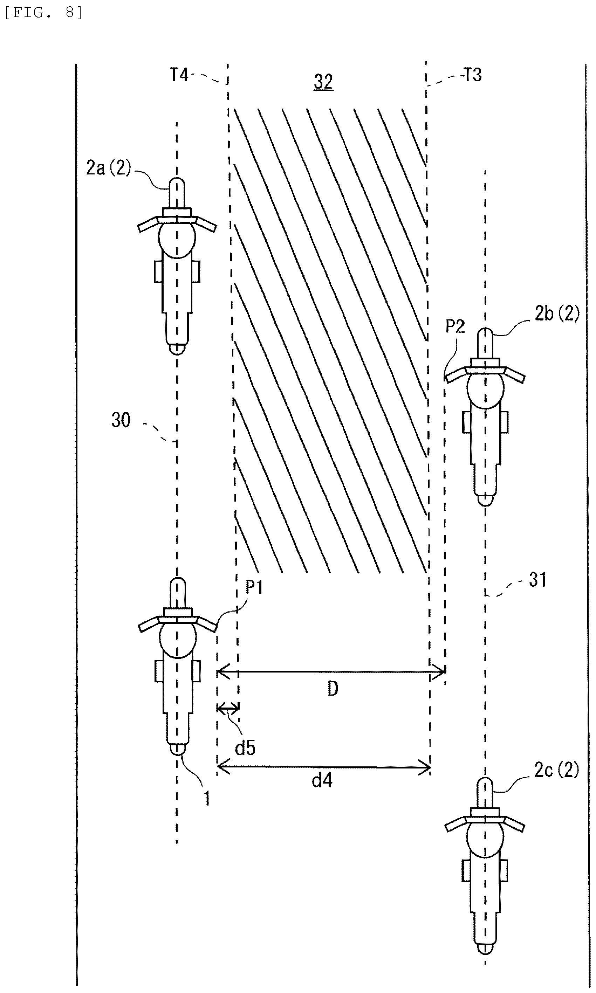

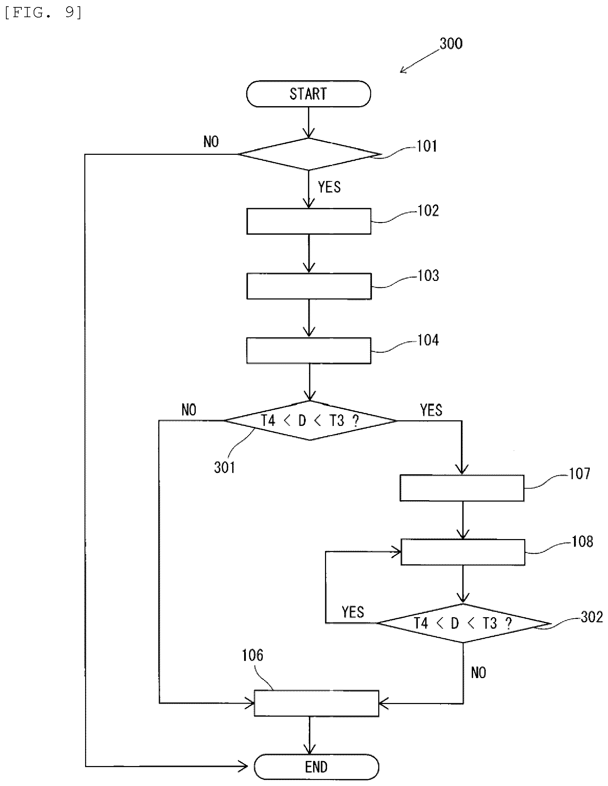

A third example of the present disclosure will be described hereafter with reference to Fig. 8 and Fig. 9.

According to the third example, the acquisition section 22 acquires, as the lateral positional relationship information between the ego vehicle 1 and the target vehicle 2b, the lateral distance D between the ego vehicle 1 and the target vehicle 2b along the lateral direction. The execution section 21 executes the first operation mode or the second operation mode based on a comparison result of comparing the lateral distance D with each of a third threshold value T3 and a fourth threshold value T4 that is smaller than the third threshold value T3.

Fig. 8 is a view illustrating a situation where the group including the ego vehicle 1 and the saddled vehicles 2 travels in the group. As illustrated in Fig. 8, an intermediate area 32 is an area that is defined between the first vehicle line 30 and the second vehicle line 31 and that belongs to neither the first vehicle line 30 nor the second vehicle line 31. For example, the intermediate area 32 is defined by the third threshold value T3 and the fourth threshold value T4. More specifically, the third threshold value T3 is a value indicating a point that is away from the ego vehicle 1 by a distance d4 along the lateral direction. The third threshold value T3 is shown by an imaginary line extending along the travel direction of the ego vehicle 1. The fourth threshold value T4 is a value indicating a point that is away from the ego vehicle 1 by a distance d5 along the lateral direction. The fourth threshold value T4 is shown by an imaginary line extending along the travel direction of the ego vehicle 1. That is, the intermediate area 32 is within a range where a distance from the ego vehicle 1 along the lateral direction is shorter than the distance d4 and is longer than the distance d5. The distance d4 is longer than the distance d5. In addition, the third threshold value T3 is larger than the fourth threshold value T4.

According to the third example, similar to the first example, the execution section 21 sets the other vehicle 2b as the target vehicle (i.e., the position identification target vehicle). The other vehicle 2b is one of the other vehicles 2a, 2b, 2c that is located closest to the ego vehicle 1 along the front-rear direction among the other vehicles 2a, 2b, 2c. The acquisition section 22 acquires the lateral distance D between the ego vehicle 1 and the target vehicle 2b as the lateral positional relationship information between the ego vehicle 1 and the target vehicle 2b, similar to the first example.

Fig. 9 is a flowchart illustrating a control flow 300 of the automatic speed following operation according to the third example. In Fig. 9, of control process in the control flow 300, the control process that is common to the control process in the control flow 100 according to the first example will be denoted by the same reference sign, and an overlapping description thereon will not be made.

According to the third example, when the acquisition section 22 acquires the lateral distance D at step 104. When the lateral distance D is acquired at step 104, the control flow 300 advances to step 301.

At step 301, the execution section 21 executes a determination process in which it is determined whether the target vehicle 2b is positioned inside the intermediate area 32. Specifically, the execution section 21, at step 301, executes a determination process in which it is determined whether the lateral distance D between the ego vehicle 1 and the target vehicle 2b is smaller than the third threshold value T3 and larger than the fourth threshold value T4. However, the execution section 21, at step 301, may execute a determination process in which it is determined whether the lateral distance D between the ego vehicle 1 and the target vehicle 2b is smaller than or equal to the third threshold value T3 and larger than or equal to the fourth threshold value T4. As another example, the execution section 21, at step 301, may execute a determination process in which it is determined whether the lateral distance D between the ego vehicle 1 and the target vehicle 2b is smaller than or equal to the third threshold value T3 and larger than the fourth threshold value T4. As another example, the execution section 21, at step 301, may execute a determination process in which it is determined whether the lateral distance D between the ego vehicle 1 and the target vehicle 2b is smaller than the third threshold value T3 and larger than or equal to the fourth threshold value T4. The execution section 21, at step 301, may have the determination section 25 determine whether the target vehicle 2b is positioned inside the intermediate area 32 in the determination process.

When it is determined, at step 301, that the target vehicle 2b is not positioned inside the intermediate area 32 (step 301: NO), the control flow 300 advances to step 106. At step 106, the execution section 21 sets the passing time gap to be the reference passing time gap by executing the first operation mode in which the longitudinal positional relationship between the ego vehicle 1 and the target vehicle 2b is adjusted to have the approaching tendency.

When it is determined, at step 301, that the target vehicle 2b is positioned inside the intermediate area 32 (step 301: YES), the control flow 300 advances to step 107. At step 107, the execution section 21 executes the second operation mode to adjust the passing time gap. More specifically, the execution section 21 changes the passing time gap from the reference passing time gap to the adjusted passing time gap by executing the second operation mode.

In the third example, the case where the lateral positional relationship information between the ego vehicle 1 and the target vehicle 2b is the information indicating that the ego vehicle 1 and the target vehicle 2b are located close to each other along the lateral direction is a case where the target vehicle 2b is positioned inside the intermediate area 32, that is, a case where the lateral distance D is smaller than the third threshold value T3 (in other words, the distance d4) and is larger than the fourth threshold value T4 (in other words, the distance d5). According to the third example, when the target vehicle 2b is positioned inside the intermediate area 32, it is determined that the ego vehicle 1 and the target vehicle 2b are located close to each other along the lateral direction and thus there is the possibility of the collision. Thus, the execution section 21 executes the second operation mode to set the passing time gap to the increased passing time gap and thereby prevents the collision.

In the third example, the case where the lateral positional relationship information between the ego vehicle 1 and the target vehicle 2b is the information indicating that the ego vehicle 1 and the target vehicle 2b are located away from each other along the lateral direction is a case where the target vehicle 2b is not positioned inside the intermediate area 32, that is, a case where the lateral distance D is larger than or equal to the third threshold value T3 (in other words, the distance d4). According to the third example, when the target vehicle 2b is not positioned inside the intermediate area 32, it can be determined that there is the low possibility of the collision between the ego vehicle 1 and the target vehicle 2b. Thus, the execution section 21 sets the passing time gap to be the reference passing time gap by executing the first operation mode in which the longitudinal positional relationship between the ego vehicle 1 and the target vehicle 2b is adjusted to have the approaching tendency.

The third threshold value T3 is set to a value that is large enough to determine that the ego vehicle 1 and the target vehicle 2b are positioned in the different vehicle lines. When the ego vehicle 1 and the target vehicle 2b belong to the different vehicle lines, it can be determined that the ego vehicle 1 and the target vehicle 2b are sufficiently away from each other along the lateral direction and thus there is the low possibility of the collision.

The fourth threshold value T4 is set to a relatively small value with which it can be determined that the ego vehicle 1 and the target vehicle 2b belong to the same vehicle line. Here, the controller 20 according to the present disclosure particularly and effectively functions to prevent the collision between the ego vehicle 1 and the target vehicle 2b when the ego vehicle 1 and the target vehicle 2b belong to the different vehicle lines and the target vehicle 2b approaches the ego vehicle 1 laterally. Thus, when the ego vehicle 1 and the target vehicle 2b belong to the same vehicle line, the passing time gap control, in which the target vehicle 2b is set as the position identification target vehicle, (in other words, the first operation mode and the second operation mode) is not executed. However, when the lateral distance D is smaller than or equal to the fourth threshold value T4 and it is determined that the ego vehicle 1 and the target vehicle 2b belong to the same vehicle line, the execution section 21 may set the target vehicle 2b as the target vehicle to follow and may adjust the speed of the ego vehicle 1 according to the speed of the target vehicle 2b so that the ego vehicle 1 is maneuvered to follow the target vehicle 2b automatically.

The control processes at step 108 and at step 302 are substantially the same as the control processes at step 104 and at step 301, respectively. That is, the acquiring section 22 acquires the lateral distance D at step 108. The execution section, at step 302, executes the determination process in which it is determined whether the target vehicle 2b is positioned inside the intermediate area 32. When it is determined, at step 302, that the target vehicle 2b is positioned inside the intermediate area 32 (step 302: YES), the control flow 300 returns to step 108. The control processes at step 108 and at step 302 are repeated until it is determined that the target vehicle 2b is not positioned inside the intermediate area 32.

When it is determined, at step 302, that the target vehicle 2b is not positioned inside the intermediate area 32 (step 302: NO), the control flow 300 advances to step 106.

A description will hereinafter be made on effects of the third example.

According to the third example, to the execution section 21 executes the first operation mode or the second operation mode based on the two threshold values, in other words, the third threshold value T3 (i.e., the distance d4) and the fourth threshold value T4 (i.e., the distance d5). In this way, it is possible to identify the positional relationship between the ego vehicle 1 and the target vehicle 2b along the lateral direction further in detail and thus to determine necessity of switching between the first operation mode and the second operation mode with a high degree of accuracy.

By determining the necessity of switching between the first operation mode and the second operation mode with the high degree of accuracy, the unnecessary change in the passing time gap between the ego vehicle 1 and the target vehicle 2b can be prevented from occurring and can be prevented from occurring frequently. As a result, the distance between the ego vehicle 1 and the target vehicle 2b along the front-rear direction can be prevented from changing rapidly can be prevented from changing unnecessarily. Such unnecessary change in the distance between the ego vehicle 1 and the target vehicle 2b along the front-rear direction can be prevented from occurring frequently. Thus, according to the third example, the automatic speed following operation can be executed stably. Furthermore, by smoothly changing the distance between the ego vehicle 1 and the target vehicle 2b along the front-rear direction, the automatic speed following operation can be executed without giving a sense of discomfort to the rider. That is, it is possible to improve safety of the automatic speed following operation.

According to the third example explained above, the intermediate area 32 is defined based on the distance d4 and the distance d5 from the ego vehicle 1 along the lateral direction, and the execution section 21 determines whether the target vehicle 2b is positioned inside the intermediate area 32. However, each of the distance d4 and the distance d5 may be a distance from the ego vehicle 1 to the target vehicle 2b along the lateral direction. In this case, it may be determined whether the ego vehicle 1 is positioned inside the intermediate area 32. That is, as the positional relationship between the ego vehicle 1 and the target vehicle 2b along the lateral direction, it may be determined whether the ego vehicle 1 or the target vehicle 2b is positioned inside the intermediate area 32.

In addition, according to the third example explained above, in a case where the vehicle lines to which the ego vehicle 1 and/or the target vehicle 2b belong are identified, the execution section 21 may determine whether the target vehicle 2b belongs to the first vehicle line 30 to which the ego vehicle 1 belongs or may determine whether the ego vehicle 1 belongs to the second vehicle line 31 to which the target vehicle 2b belongs.

The first example, the second example, and the third example described above may appropriately be combined. For example, in the passing time gap control, the acquisition section 22 may acquire the lateral distance D as the positional relationship between the ego vehicle 1 and the target vehicle 2b along the lateral direction, and the execution section 21 may determine whether the target vehicle 2b is positioned inside the intermediate area 32 to execute the first operation mode and the second operation mode selectively. For example, while the group ride mode is available, the execution section 21 may execute the first operation mode or the second operation mode, based on both of a result of comparing the lateral distance D with threshold values as described in the first example and/or the second example and a result of defining whether the target vehicle 2b is positioned inside the intermediate area 32 as described in the third example. For example, the execution section 21 may execute the first operation mode in which the longitudinal positional relationship between the ego vehicle 1 and the target vehicle 2b is adjusted to have the approaching tendency when the lateral distance D is larger than the first threshold value T1 and/or the reference distance d3 is smaller than the second threshold value T2 while the target vehicle 2b is not positioned inside the intermediate area 32. For example, the execution section 21 may execute the second operation mode in which the longitudinal positional relationship between the ego vehicle 1 and the target vehicle 2b is adjusted to have the separating tendency when the lateral distance D is smaller than the first threshold value T1 and/or the reference distance d3 is larger than the second threshold value T2 while the target vehicle 2b is positioned inside the intermediate area 32. In this way, it is possible to further reliably execute the passing time gap control.

### Reference Signs List

- 1:: Ego vehicle
- 2a:: Other vehicle
- 2b:: Other vehicle
- 2c:: Other vehicle
- 11:: Engine
- 12:: Hydraulic pressure control unit
- 13:: Display device
- 14:: Surrounding environment sensor
- 15:: Input device
- 16:: Front-wheel rotational frequency sensor
- 17:: Rear-wheel rotational frequency sensor
- 20:: Controller
- 21:: Execution section
- 22:: Acquisition section
- 23:: Identification section
- 24:: Setting section
- 25:: Determination section
- 26:: Calculation section
- 30:: First vehicle line
- 31:: Second vehicle line
- 32:: Intermediate area
- 100:: Control flow
- 200:: Control flow
- 300:: Control flow
- D:: Lateral distance
- L1:: First lane marker
- L2:: Second lane marker

## Claims

1. A controller (20) configured to maneuver an ego vehicle (1) that is a saddled vehicle, the controller (20) comprising:
an execution section (21) that is configured to execute an automatic speed following operation by controlling a longitudinal positional relationship, the longitudinal positional relationship that is a positional relationship between the ego vehicle (1) and a target vehicle (2b) along a front-rear direction, the automatic speed following operation that is an operation in which a speed of the ego vehicle (1) is adjusted according to a speed of the target vehicle (2b) so that the ego vehicle (1) is maneuvered to follow the target vehicle (2b) automatically, the controller (20) further comprising:
an acquisition section (22) that is configured to acquire a lateral positional relationship information as information about a positional relationship between the ego vehicle (1) and the target vehicle (2b) along a lateral direction, wherein
when a group ride mode, in which a plurality of saddled vehicles including the ego vehicle (1) and the target vehicle (2b) travel in a group, is valid, the execution section (21), in the automatic speed following operation, executes:
a first operation mode in which the longitudinal positional relationship is adjusted to have an approaching tendency executing a reference setting process in which a passing time gap between the ego vehicle (1) and the target vehicle (2b) is set to a reference passing time gap to control the longitudinal positional relationship between the ego vehicle (1) and the target vehicle (2b) so that a distance between the ego vehicle (1) and the target vehicle (2b) along the front-rear direction becomes a reference target distance; and
a second operation mode in which the longitudinal positional relationship is adjusted to have a separating tendency executing a passing time gap adjusting process in which an adjusted passing time gap that is greater than the reference passing time gap is set to control the longitudinal positional relationship between the ego vehicle (1) and the target vehicle (2b) so that the distance between the ego vehicle (1) and the target vehicle (2b) along the front-rear direction becomes an increased target distance which is greater than the reference target distance that is the distance between the ego vehicle (1) and the other vehicle (2b) along the front-rear direction, and
the execution section (21) executes the first operation mode and the second operation mode based on the lateral positional relationship information.

2. The controller according to claim 1, wherein
the execution section (21), in the automatic speed following operation:
executes the first operation mode and adjusts the longitudinal positional relationship to have the approaching tendency when the lateral positional relationship information indicates that the ego vehicle (1) and the target vehicle (2b) are located away from each other along the lateral direction; and
executes the second operation mode and adjusts the longitudinal positional relationship to have the separating tendency when the lateral positional relationship information indicates that the ego vehicle (1) and the target vehicle (2b) are located close to each other along the lateral direction, wherein
the acquisition section (22) acquires, as the lateral positional relationship information, a lateral distance (D) between the ego vehicle (1) and the target vehicle (2b) along the lateral direction,
the execution section (21) executes the first operation mode and the second operation mode based on a comparison between the lateral distance (D) and a first threshold value (T1),
a case where the lateral positional relationship information indicates that the ego vehicle (1) and the target vehicle (2b) are located away from each other along the lateral direction is a case where the lateral distance (D) is larger than the first threshold value (T1), and
a case where the lateral positional relationship information indicates that the ego vehicle (1) and the target vehicle (2b) are located close to each other along the lateral direction is a case where the lateral distance (D) is smaller than the first threshold value (T1).

3. The controller according to claim 1, wherein
the execution section (21), in the automatic speed following operation:
executes the first operation mode and adjusts the longitudinal positional relationship to have the approaching tendency when the lateral positional relationship information indicates that the ego vehicle (1) and the target vehicle (2b) are located away from each other along the lateral direction; and
executes the second operation mode and adjusts the longitudinal positional relationship to have the separating tendency when the lateral positional relationship information indicates that the ego vehicle (1) and the target vehicle (2b) are located close to each other along the lateral direction, wherein
the acquisition section (22) acquires, as the lateral positional relationship information, a first distance (d1) related to the ego vehicle (1) and a second distance (d2) related to the target vehicle (2b),
the execution section (21) executes the first operation mode and the second operation mode based on a comparison between a reference distance and the second threshold value (T2), where the reference distance is a distance that is calculated by adding up the first distance (d1) and the second distance (d2),
a case where the lateral positional relationship information indicates that the ego vehicle (1) and the target vehicle (2b) are located away from each other along the lateral direction is a case where the reference distance is smaller than the second threshold value (T2), and
a case where the lateral positional relationship information indicates that the ego vehicle (1) and the target vehicle (2b) are located close to each other along the lateral direction is a case where the reference distance is larger than the second threshold value (T2).

4. The controller according to claim 3, wherein
the first distance (d1) is a distance in the lateral direction between the ego vehicle (1) and whichever of a first lane marker (L1) and a second lane marker (L2), which define a travel lane in which the ego vehicle (1) and the target vehicle (2b) travel, is closer to the ego vehicle (1), and
the second distance (d2) is a distance in the lateral direction between the target vehicle (2b) and whichever of the first lane marker (L1) and the second lane marker (L2) is closer to the target vehicle (2b).

5. The controller according to claim 1, wherein
the execution section (21), in the automatic speed following operation:
executes the first operation mode and adjusts the longitudinal positional relationship to have the approaching tendency when the lateral positional relationship information indicates that the ego vehicle (1) and the target vehicle (2b) are located away from each other along the lateral direction; and
executes the second operation mode and adjusts the longitudinal positional relationship to have the separating tendency when the lateral positional relationship information indicates that the ego vehicle (1) and the target vehicle (2b) are located close to each other along the lateral direction, wherein
the acquisition section (22) acquires, as the lateral positional relationship information, a lateral distance (D) between the ego vehicle (1) and the target vehicle (2b) along the lateral direction,
the execution section (21) executes the first operation mode and the second operation mode based on a comparison between the lateral distance (D) and each of a third threshold value (T3) and a fourth threshold value (T4) that is smaller than the third threshold value (T3),
a case where the lateral positional relationship information indicates that the ego vehicle (1) and the target vehicle (2b) are located away from each other along the lateral direction is a case where the lateral distance (D) is larger than the third threshold value (T3), and
a case where the lateral positional relationship information indicates that the ego vehicle (1) and the target vehicle (2b) are located close to each other along the lateral direction is a case where the lateral distance (D) is smaller than the third threshold value (T3) and larger than the fourth threshold value (T4).

6. The controller according to claim 5, wherein
the execution section (21)
executes the first operation mode and adjusts the longitudinal positional relationship to have the approaching tendency when the lateral distance (D) is larger than or equal to the third threshold value (T3), and
executes the second operation mode and adjusts the longitudinal positional relationship to have the separating tendency when the lateral distance (D) is smaller than the third threshold value (T3) and larger than the fourth threshold value (T4).

7. The controller according to claim 1, wherein
the automatic speed following operation includes an operation in which the speed of the ego vehicle (1) is adjusted according to the speed of the target vehicle (2b) so that the ego vehicle (1) is maneuvered to follow the target vehicle (2b) automatically regardless of an accelerating/decelerating operation by a rider of the ego vehicle (1).

8. The controller according to claim 1, wherein
the automatic speed following operation includes an operation to correct excess or deficiency of an accelerating/decelerating operation by a rider of the ego vehicle (1) so that the speed of the ego vehicle (1) is adjusted according to the speed of the target vehicle (2b) and that the ego vehicle (1) is maneuvered to follow the target vehicle (2b) automatically.

9. A control method for maneuvering an ego vehicle (1) that is a saddled vehicle, the control method comprising:
executing, using an execution section (21) of a controller (20), an automatic speed following operation by controlling a longitudinal positional relationship, the longitudinal positional relationship that is a positional relationship between the ego vehicle (1) and a target vehicle (2b) along a front-rear direction, the automatic speed following operation that is an operation in which a speed of the ego vehicle (1) is adjusted according to a speed of the target vehicle (2b) so that the ego vehicle (1) is maneuvered to follow the target vehicle (2b) automatically, the control method further comprising:
acquiring, using an acquisition section (22) of the controller (20), a lateral positional relationship information as information about a positional relationship between the ego vehicle (1) and the target vehicle (2b) along a lateral direction, wherein
when a group ride mode, in which a plurality of saddled vehicles including the ego vehicle (1) and the target vehicle (2b) travel in a group, is valid, the execution section (21), in the automatic speed following operation, executes:
a first operation mode in which the longitudinal positional relationship is adjusted to have an approaching tendency executing a reference setting process in which a passing time gap between the ego vehicle (1) and the target vehicle (2b) is set to a reference passing time gap to control the longitudinal positional relationship between the ego vehicle (1) and the target vehicle (2b) so that a distance between the ego vehicle (1) and the target vehicle (2b) along the front-rear direction becomes a reference target distance; and
a second operation mode in which the longitudinal positional relationship is adjusted to have a separating tendency executing a passing time gap adjusting process in which an adjusted passing time gap that is greater than the reference passing time gap is set to control the longitudinal positional relationship between the ego vehicle (1) and the target vehicle (2b) so that the distance between the ego vehicle (1) and the target vehicle (2b) along the front-rear direction becomes an increased target distance which is greater than the reference target distance that is the distance between the ego vehicle (1) and the other vehicle (2b) along the front-rear direction, and
the execution section (21) executes the first operation mode and the second operation mode based on the lateral positional relationship information.

## Patentansprüche

1. Steuerung (20), die dazu konfiguriert ist, ein Ego-Fahrzeug (1), das ein Sattelfahrzeug ist, zu manövrieren, wobei die Steuerung (20) Folgendes umfasst:
einen Ausführungsabschnitt (21), der dazu konfiguriert ist, durch Steuern einer Längspositionsbeziehung einen automatischen Geschwindigkeitsfolgevorgang auszuführen, wobei die Längspositionsbeziehung eine Positionsbeziehung zwischen dem Ego-Fahrzeug (1) und einem Zielfahrzeug (2b) entlang einer Front-Heck-Richtung ist, wobei der automatische Geschwindigkeitsfolgevorgang ein Vorgang ist, bei dem eine Geschwindigkeit des Ego-Fahrzeugs (1) in Abhängigkeit von einer Geschwindigkeit des Zielfahrzeugs (2b) angepasst wird, sodass das Ego-Fahrzeug (1) so manövriert wird, dass es dem Zielfahrzeug (2b) automatisch folgt, wobei die Steuerung (20) ferner Folgendes umfasst:
einen Erfassungsabschnitt (22), der dazu konfiguriert ist, eine Querpositionsbeziehungsinformation als Information über eine Positionsbeziehung zwischen dem Ego-Fahrzeug (1) und dem Zielfahrzeug (2b) entlang einer Querrichtung zu erfassen, wobei, wenn ein Gruppenfahrmodus, in dem eine Mehrzahl von Sattelfahrzeugen, die das Ego-Fahrzeug (1) und das Zielfahrzeug (2b) enthält, in einer Gruppe fährt, gültig ist, der Ausführungsabschnitt (21) bei dem automatischen Geschwindigkeitsfolgevorgang Folgendes ausführt:
einen ersten Betriebsmodus, in dem die Längspositionsbeziehung so angepasst wird, dass sie eine Annäherungstendenz unter Ausführen eines Referenzsetzungsprozesses aufweist, bei dem ein Passierzeitintervall zwischen dem Ego-Fahrzeug (1) und dem Zielfahrzeug (2b) auf ein Referenzpassierzeitintervall eingestellt wird, um die Längspositionsbeziehung zwischen dem Ego-Fahrzeug (1) und dem Zielfahrzeug (2b) zu steuern, sodass ein Abstand zwischen dem Ego-Fahrzeug (1) und dem Zielfahrzeug (2b) entlang der Front-Heck-Richtung zu einem Referenzzielabstand wird; und
einen zweiten Betriebsmodus, in dem die Längspositionsbeziehung so angepasst wird, dass sie eine Trennungstendenz unter Ausführen eines Passierzeitintervallanpassungsprozesses aufweist, bei dem ein angepasstes Passierzeitintervall, das größer als das Referenzpassierzeitintervall ist, eingestellt wird, um die Längspositionsbeziehung zwischen dem Ego-Fahrzeug (1) und dem Zielfahrzeug (2b) zu steuern, sodass der Abstand zwischen dem Ego-Fahrzeug (1) und dem Zielfahrzeug (2b) entlang der Front-Heck-Richtung zu einem vergrößerten Zielabstand wird, der größer als der Referenzzielabstand ist, der der Abstand zwischen dem Ego-Fahrzeug (1) und dem anderen Fahrzeug (2b) entlang der Front-Heck-Richtung ist, und
der Ausführungsabschnitt (21) den ersten Betriebsmodus und den zweiten Betriebsmodus auf der Basis der Querpositionsbeziehungsinformation ausführt.

2. Steuerung nach Anspruch 1, wobei
der Ausführungsabschnitt (21) bei dem automatischen Geschwindigkeitsfolgevorgang:
den ersten Betriebsmodus ausführt und die Längspositionsbeziehung so anpasst, dass sie die Annäherungstendenz aufweist, wenn die Querpositionsbeziehungsinformation darauf hinweist, dass sich das Ego-Fahrzeug (1) und das Zielfahrzeug (2b) entlang der Querrichtung voneinander entfernt befinden; und
den zweiten Betriebsmodus ausführt und die Längspositionsbeziehung so anpasst, dass sie die Trennungstendenz aufweist, wenn die Querpositionsbeziehungsinformation darauf hinweist, dass sich das Ego-Fahrzeug (1) und das Zielfahrzeug (2b) entlang der Querrichtung nahe beieinander befinden, wobei
der Erfassungsabschnitt (22) als die Querpositionsbeziehungsinformation einen Querabstand (D) zwischen dem Ego-Fahrzeug (1) und dem Zielfahrzeug (2b) entlang der Querrichtung erfasst,
der Ausführungsabschnitt (21) den ersten Betriebsmodus und den zweiten Betriebsmodus auf der Basis eines Vergleichs zwischen dem Querabstand (D) und einem ersten Schwellenwert (T1) ausführt,
ein Fall, in dem die Querpositionsbeziehungsinformation darauf hinweist, dass sich das Ego-Fahrzeug (1) und das Zielfahrzeug (2b) entlang der Querrichtung voneinander entfernt befinden, ein Fall ist, in dem der Querabstand (D) größer als der erste Schwellenwert (T1) ist, und
ein Fall, in dem die Querpositionsbeziehungsinformation darauf hinweist, dass sich das Ego-Fahrzeug (1) und das Zielfahrzeug (2b) entlang der Querrichtung nahe beieinander befinden, ein Fall ist, in dem der Querabstand (D) kleiner als der erste Schwellenwert (T1) ist.

3. Steuerung nach Anspruch 1, wobei
der Ausführungsabschnitt (21) bei dem automatischen Geschwindigkeitsfolgevorgang:
den ersten Betriebsmodus ausführt und die Längspositionsbeziehung so anpasst, dass sie die Annäherungstendenz aufweist, wenn die Querpositionsbeziehungsinformation darauf hinweist, dass sich das Ego-Fahrzeug (1) und das Zielfahrzeug (2b) entlang der Querrichtung voneinander entfernt befinden; und
den zweiten Betriebsmodus ausführt und die Längspositionsbeziehung so anpasst, dass sie die Trennungstendenz aufweist, wenn die Querpositionsbeziehungsinformation darauf hinweist, dass sich das Ego-Fahrzeug (1) und das Zielfahrzeug (2b) entlang der Querrichtung nahe beieinander befinden, wobei
der Erfassungsabschnitt (22) als die Querpositionsbeziehungsinformation einen auf das Ego-Fahrzeug (1) bezogenen ersten Abstand (d1) und einen auf das Zielfahrzeug (2b) bezogenen zweiten Abstand (d2) erfasst,
der Ausführungsabschnitt (21) den ersten Betriebsmodus und den zweiten Betriebsmodus auf der Basis eines Vergleichs zwischen einem Referenzabstand und dem zweiten Schwellenwert (T2) ausführt, wobei der Referenzabstand ein Abstand ist, der durch Addieren des ersten Abstands (d1) und des zweiten Abstands (d2) berechnet wird, ein Fall, in dem die Querpositionsbeziehungsinformation darauf hinweist, dass sich das Ego-Fahrzeug (1) und das Zielfahrzeug (2b) entlang der Querrichtung voneinander entfernt befinden, ein Fall ist, in dem der Referenzabstand kleiner als der zweite Schwellenwert (T2) ist, und
ein Fall, in dem die Querpositionsbeziehungsinformation darauf hinweist, dass sich das Ego-Fahrzeug (1) und das Zielfahrzeug (2b) entlang der Querrichtung nahe beieinander befinden, ein Fall ist, in dem der Referenzabstand größer als der zweite Schwellenwert (T2) ist.

4. Steuerung nach Anspruch 3, wobei
der erste Abstand (d1) ein Abstand in der Querrichtung zwischen dem Ego-Fahrzeug (1) und einer ersten Fahrbahnmarkierung (L1) oder einer zweiten Fahrbahnmarkierung (L2), die eine Fahrspur definieren, auf der das Ego-Fahrzeug (1) und das Zielfahrzeug (2b) fahren, und zwar derjenigen, die näher bei dem Ego-Fahrzeug (1) ist, und
der zweite Abstand (d2) ein Abstand in der Querrichtung zwischen dem Zielfahrzeug (2b) und der ersten Fahrbahnmarkierung (L1) oder der zweiten Fahrbahnmarkierung (L2) ist, und zwar derjenigen, die näher bei dem Zielfahrzeug (2b) ist.

5. Steuerung nach Anspruch 1, wobei
der Ausführungsabschnitt (21) bei dem automatischen Geschwindigkeitsfolgevorgang:
den ersten Betriebsmodus ausführt und die Längspositionsbeziehung so anpasst, dass sie die Annäherungstendenz aufweist, wenn die Querpositionsbeziehungsinformation darauf hinweist, dass sich das Ego-Fahrzeug (1) und das Zielfahrzeug (2b) entlang der Querrichtung voneinander entfernt befinden; und
den zweiten Betriebsmodus ausführt und die Längspositionsbeziehung so anpasst, dass sie die Trennungstendenz aufweist, wenn die Querpositionsbeziehungsinformation darauf hinweist, dass sich das Ego-Fahrzeug (1) und das Zielfahrzeug (2b) entlang der Querrichtung nahe beieinander befinden, wobei
der Erfassungsabschnitt (22) als die Querpositionsbeziehungsinformation einen Querabstand (D) zwischen dem Ego-Fahrzeug (1) und dem Zielfahrzeug (2b) entlang der Querrichtung erfasst,
der Ausführungsabschnitt (21) den ersten Betriebsmodus und den zweiten Betriebsmodus auf der Basis eines Vergleichs zwischen dem Querabstand (D) und jedem von einem dritten Schwellenwert (T3) und einem vierten Schwellenwert (T4), der kleiner als der dritte Schwellenwert (T3) ist, ausführt,
ein Fall, in dem die Querpositionsbeziehungsinformation darauf hinweist, dass sich das Ego-Fahrzeug (1) und das Zielfahrzeug (2b) entlang der Querrichtung voneinander entfernt befinden, ein Fall ist, in dem der Querabstand (D) größer als der dritte Schwellenwert (T3) ist, und
ein Fall, in dem die Querpositionsbeziehungsinformation darauf hinweist, dass sich das Ego-Fahrzeug (1) und das Zielfahrzeug (2b) entlang der Querrichtung nahe beieinander befinden, ein Fall ist, in dem der Querabstand (D) kleiner als der dritte Schwellenwert (T3) und größer als der vierte Schwellenwert (T4) ist.

6. Steuerung nach Anspruch 5, wobei
der Ausführungsabschnitt (21)
den ersten Betriebsmodus ausführt und die Längspositionsbeziehung so anpasst, dass sie die Annäherungstendenz aufweist, wenn der Querabstand (D) größer als oder gleich dem dritten Schwellenwert (T3) ist, und
den zweiten Betriebsmodus ausführt und die Längspositionsbeziehung so anpasst, dass sie die Trennungstendenz aufweist, wenn der Querabstand (D) kleiner als der dritte Schwellenwert (T3) und größer als der vierte Schwellenwert (T4) ist.

7. Steuerung nach Anspruch 1, wobei
der automatische Geschwindigkeitsfolgevorgang einen Vorgang beinhaltet, bei dem die Geschwindigkeit des Ego-Fahrzeugs (1) in Abhängigkeit von der Geschwindigkeit des Zielfahrzeugs (2b) angepasst wird, sodass das Ego-Fahrzeug (1) so manövriert wird, dass es dem Zielfahrzeug (2b) automatisch folgt, ohne dass ein Beschleunigungs-/Abbremsvorgang eines Fahrers des Ego-Fahrzeugs (1) berücksichtigt wird.

8. Steuerung nach Anspruch 1, wobei
der automatische Geschwindigkeitsfolgevorgang einen Vorgang beinhaltet, um einen zu hohen oder zu geringen Betrag eines Beschleunigungs-/Abbremsvorgangs eines Fahrers des Ego-Fahrzeugs (1) zu korrigieren, sodass die Geschwindigkeit des Ego-Fahrzeugs (1) in Abhängigkeit von der Geschwindigkeit des Zielfahrzeugs (2b) angepasst wird und dass das Ego-Fahrzeug (1) so manövriert wird, dass es dem Zielfahrzeug (2b) automatisch folgt.

9. Steuerungsverfahren zum Manövrieren eines Ego-Fahrzeugs (1), das ein Sattelfahrzeug ist, wobei das Steuerungsverfahren Folgendes umfasst:
Ausführen, unter Verwendung eines Ausführungsabschnitts (21) einer Steuerung (20), eines automatischen Geschwindigkeitsfolgevorgangs durch Steuern einer Längspositionsbeziehung, wobei die Längspositionsbeziehung eine Positionsbeziehung zwischen dem Ego-Fahrzeug (1) und einem Zielfahrzeug (2b) entlang einer Front-Heck-Richtung ist, wobei der automatische Geschwindigkeitsfolgevorgang ein Vorgang ist, bei dem eine Geschwindigkeit des Ego-Fahrzeugs (1) in Abhängigkeit von einer Geschwindigkeit des Zielfahrzeugs (2b) angepasst wird, sodass das Ego-Fahrzeug (1) so manövriert wird, dass es dem Zielfahrzeug (2b) automatisch folgt, wobei das Steuerungsverfahren ferner Folgendes umfasst: Erfassen, unter Verwendung eines Erfassungsabschnitts (22) der Steuerung (20), einer Querpositionsbeziehungsinformation als Information über eine Positionsbeziehung zwischen dem Ego-Fahrzeug (1) und dem Zielfahrzeug (2b) entlang einer Querrichtung, wobei, wenn ein Gruppenfahrmodus, in dem eine Mehrzahl von Sattelfahrzeugen, die das Ego-Fahrzeug (1) und das Zielfahrzeug (2b) enthält, in einer Gruppe fährt, gültig ist, der Ausführungsabschnitt (21) bei dem automatischen Geschwindigkeitsfolgevorgang Folgendes ausführt:
einen ersten Betriebsmodus, in dem die Längspositionsbeziehung so angepasst wird, dass sie eine Annäherungstendenz unter Ausführen eines Referenzsetzungsprozesses aufweist, bei dem ein Passierzeitintervall zwischen dem Ego-Fahrzeug (1) und dem Zielfahrzeug (2b) auf ein Referenzpassierzeitintervall eingestellt wird, um die Längspositionsbeziehung zwischen dem Ego-Fahrzeug (1) und dem Zielfahrzeug (2b) zu steuern, sodass ein Abstand zwischen dem Ego-Fahrzeug (1) und dem Zielfahrzeug (2b) entlang der Front-Heck-Richtung zu einem Referenzzielabstand wird; und
einen zweiten Betriebsmodus, in dem die Längspositionsbeziehung so angepasst wird, dass sie eine Trennungstendenz unter Ausführen eines Passierzeitintervallanpassungsprozesses aufweist, bei dem ein angepasstes Passierzeitintervall, das größer als das Referenzpassierzeitintervall ist, eingestellt wird, um die Längspositionsbeziehung zwischen dem Ego-Fahrzeug (1) und dem Zielfahrzeug (2b) zu steuern, sodass der Abstand zwischen dem Ego-Fahrzeug (1) und dem Zielfahrzeug (2b) entlang der Front-Heck-Richtung zu einem vergrößerten Zielabstand wird, der größer als der Referenzzielabstand ist, der der Abstand zwischen dem Ego-Fahrzeug (1) und dem anderen Fahrzeug (2b) entlang der Front-Heck-Richtung ist, und
der Ausführungsabschnitt (21) den ersten Betriebsmodus und den zweiten Betriebsmodus auf der Basis der Querpositionsbeziehungsinformation ausführt.

## Revendications

1. Contrôleur (20) configuré pour manœuvrer un véhicule ego (1) qui est un véhicule à selle, le contrôleur (20) comprenant :
une section d'exécution (21) qui est configurée pour exécuter une opération de suivi de vitesse automatique en contrôlant une relation de position longitudinale, la relation de position longitudinale étant une relation de position entre le véhicule ego (1) et un véhicule cible (2b) dans une direction avant-arrière, l'opération de suivi de vitesse automatique étant une opération dans laquelle une vitesse du véhicule ego (1) est ajustée en fonction d'une vitesse du véhicule cible (2b) de façon que le véhicule ego (1) soit manœuvré pour suivre automatiquement le véhicule cible (2b), le contrôleur (20) comprenant en outre :
une section d'acquisition (22) qui est configurée pour acquérir des informations de relation de position latérale en tant qu'informations concernant une relation de position entre le véhicule ego (1) et le véhicule cible (2b) dans une direction latérale, où
lorsqu'un mode de conduite en groupe, dans lequel une pluralité de véhicules à selle comprenant le véhicule ego (1) et le véhicule cible (2b) se déplacent en groupe, est valide, la section d'exécution (21), dans l'opération de suivi de vitesse automatique, exécute :
un premier mode de fonctionnement dans lequel la relation de position longitudinale est ajustée pour avoir une tendance de rapprochement exécutant un processus de réglage de référence dans lequel un intervalle de temps de dépassement entre le véhicule ego (1) et le véhicule cible (2b) est réglé sur un intervalle de temps de dépassement de référence pour commander la relation de position longitudinale entre le véhicule ego (1) et le véhicule cible (2b) de façon qu'une distance entre le véhicule ego (1) et le véhicule cible (2b) dans la direction avant-arrière devienne une distance cible de référence ; et
un second mode de fonctionnement dans lequel la relation de position longitudinale est ajustée pour avoir une tendance de séparation exécutant un processus d'ajustement d'intervalle de temps de dépassement dans lequel un intervalle de temps de dépassement ajusté qui est supérieur à l'intervalle de temps de dépassement de référence est réglé pour commander la relation de position longitudinale entre le véhicule ego (1) et le véhicule cible (2b) de façon que la distance entre le véhicule ego (1) et le véhicule cible (2b) dans la direction avant-arrière devienne une distance cible augmentée, supérieure à la distance cible de référence qui est la distance entre le véhicule ego (1) et l'autre véhicule (2b) dans la direction avant-arrière, et
la section d'exécution (21) exécute le premier mode de fonctionnement et le second mode de fonctionnement sur la base des informations de relation de position latérale.

2. Contrôleur selon la revendication 1, dans lequel la section d'exécution (21), dans l'opération de suivi de vitesse automatique :
exécute le premier mode de fonctionnement et ajuste la relation de position longitudinale pour avoir la tendance de rapprochement lorsque les informations de relation de position latérale indiquent que le véhicule ego (1) et le véhicule cible (2b) sont situés à distance l'un de l'autre dans la direction latérale ; et exécute le second mode de fonctionnement et ajuste la relation de position longitudinale pour avoir la tendance de séparation lorsque les informations de relation de position latérale indiquent que le véhicule ego (1) et le véhicule cible (2b) sont situés à proximité l'un de l'autre dans la direction latérale, où la section d'acquisition (22) acquiert, en tant qu'informations de relation de position latérale, une distance latérale (D) entre le véhicule ego (1) et le véhicule cible (2b) dans la direction latérale,
la section d'exécution (21) exécute le premier mode de fonctionnement et le second mode de fonctionnement sur la base d'une comparaison entre la distance latérale (D) et une première valeur seuil (T1),
un cas dans lequel les informations de relation de position latérale indiquent que le véhicule ego (1) et le véhicule cible (2b) sont situés à distance l'un de l'autre dans la direction latérale étant un cas dans lequel la distance latérale (D) est supérieure à la première valeur seuil (T1), et
un cas dans lequel les informations de relation de position latérale indiquent que le véhicule ego (1) et le véhicule cible (2b) sont situés à proximité l'un de l'autre dans la direction latérale étant un cas dans lequel la distance latérale (D) est inférieure à la première valeur seuil (T1).

3. Contrôleur selon la revendication 1, dans lequel la section d'exécution (21), dans l'opération de suivi de vitesse automatique :
exécute le premier mode de fonctionnement et ajuste la relation de position longitudinale pour avoir la tendance de rapprochement lorsque les informations de relation de position latérale indiquent que le véhicule ego (1) et le véhicule cible (2b) sont situés à distance l'un de l'autre dans la direction latérale ; et exécute le second mode de fonctionnement et ajuste la relation de position longitudinale pour avoir la tendance de séparation lorsque les informations de relation de position latérale indiquent que le véhicule ego (1) et le véhicule cible (2b) sont situés à proximité l'un de l'autre dans la direction latérale, où la section d'acquisition (22) acquiert, en tant qu'informations de relation de position latérale, une première distance (d1) liée au véhicule ego (1) et une seconde distance (d2) liée au véhicule cible (2b),
la section d'exécution (21) exécute le premier mode de fonctionnement et le second mode de fonctionnement sur la base d'une comparaison entre une distance de référence et la seconde valeur seuil (T2), la distance de référence étant une distance calculée en additionnant la première distance (d1) et la seconde distance (d2),
un cas dans lequel les informations de relation de position latérale indiquent que le véhicule ego (1) et le véhicule cible (2b) sont situés à distance l'un de l'autre dans la direction latérale étant un cas dans lequel la distance de référence est inférieure à la seconde valeur seuil (T2), et
un cas dans lequel les informations de relation de position latérale indiquent que le véhicule ego (1) et le véhicule cible (2b) sont situés à proximité l'un de l'autre dans la direction latérale étant un cas dans lequel la distance de référence est supérieure à la seconde valeur seuil (T2).

4. Contrôleur selon la revendication 3, dans lequel la première distance (d1) est une distance dans la direction latérale entre le véhicule ego (1) et celui d'un premier marqueur de voie (L1) et d'un second marqueur de voie (L2), qui définissent une voie de circulation dans laquelle se déplacent le véhicule ego (1) et le véhicule cible (2b), qui est le plus proche du véhicule ego (1), et
la seconde distance (d2) est une distance dans la direction latérale entre le véhicule cible (2b) et le premier marqueur de voie (L1) ou le second marqueur de voie (L2) qui est le plus proche du véhicule cible (2b).

5. Contrôleur selon la revendication 1, dans lequel la section d'exécution (21), dans l'opération de suivi de vitesse automatique :
exécute le premier mode de fonctionnement et ajuste la relation de position longitudinale pour avoir la tendance de rapprochement lorsque les informations de relation de position latérale indiquent que le véhicule ego (1) et le véhicule cible (2b) sont situés à distance l'un de l'autre dans la direction latérale ; et exécute le second mode de fonctionnement et ajuste la relation de position longitudinale pour avoir la tendance de séparation lorsque les informations de relation de position latérale indiquent que le véhicule ego (1) et le véhicule cible (2b) sont situés à proximité l'un de l'autre dans la direction latérale, où la section d'acquisition (22) acquiert, en tant qu'informations de relation de position latérale, une distance latérale (D) entre le véhicule ego (1) et le véhicule cible (2b) dans la direction latérale,
la section d'exécution (21) exécute le premier mode de fonctionnement et le second mode de fonctionnement sur la base d'une comparaison entre la distance latérale (D) et chacune d'une troisième valeur seuil (T3) et d'une quatrième valeur seuil (T4) qui est inférieure à la troisième valeur seuil (T3),
un cas dans lequel les informations de relation de position latérale indiquent que le véhicule ego (1) et le véhicule cible (2b) sont situés à distance l'un de l'autre dans la direction latérale étant un cas dans lequel la distance latérale (D) est supérieure à la troisième valeur seuil (T3), et
un cas dans lequel les informations de relation de position latérale indiquent que le véhicule ego (1) et le véhicule cible (2b) sont situés à proximité l'un de l'autre dans la direction latérale étant un cas dans lequel la distance latérale (D) est inférieure à la troisième valeur seuil (T3) et supérieure à la quatrième valeur seuil (T4).

6. Contrôleur selon la revendication 5, dans lequel la section d'exécution (21)
exécute le premier mode de fonctionnement et ajuste la relation de position longitudinale pour avoir la tendance de rapprochement lorsque la distance latérale (D) est supérieure ou égale à la troisième valeur seuil (T3), et
exécute le second mode de fonctionnement et ajuste la relation de position longitudinale pour avoir la tendance de séparation lorsque la distance latérale (D) est inférieure à la troisième valeur seuil (T3) et supérieure à la quatrième valeur seuil (T4).

7. Contrôleur selon la revendication 1, dans lequel l'opération de suivi de vitesse automatique comprend une opération dans laquelle la vitesse du véhicule ego (1) est ajustée en fonction de la vitesse du véhicule cible (2b) de façon que le véhicule ego (1) soit manœuvré pour suivre automatiquement le véhicule cible (2b) indépendamment d'une opération d'accélération/décélération par un pilote du véhicule ego (1).

8. Contrôleur selon la revendication 1, dans lequel l'opération de suivi de vitesse automatique comprend une opération pour corriger un excès ou une déficience d'une opération d'accélération/décélération par un conducteur du véhicule ego (1) de façon que la vitesse du véhicule ego (1) soit ajustée en fonction de la vitesse du véhicule cible (2b) et que le véhicule ego (1) soit manœuvré pour suivre automatiquement le véhicule cible (2b).

9. Procédé de commande pour manœuvrer un véhicule ego (1) qui est un véhicule à selle, le procédé de commande comprenant :
l'exécution, à l'aide d'une section d'exécution (21) d'un contrôleur (20), d'une opération de suivi de vitesse automatique en contrôlant une relation de position longitudinale, la relation de position longitudinale étant une relation de position entre le véhicule ego (1) et un véhicule cible (2b) dans une direction avant-arrière, l'opération de suivi de vitesse automatique étant une opération dans laquelle une vitesse du véhicule ego (1) est ajustée en fonction d'une vitesse du véhicule cible (2b) de façon que le véhicule ego (1) soit manœuvré pour suivre automatiquement le véhicule cible (2b), le procédé de commande comprenant en outre :
l'acquisition, au moyen d'une section d'acquisition (22) du contrôleur (20), d'informations de relation de position latérale en tant qu'informations concernant une relation de position entre le véhicule ego (1) et le véhicule cible (2b) dans une direction latérale, où
lorsqu'un mode de conduite en groupe, dans lequel une pluralité de véhicules à selle comprenant le véhicule ego (1) et le véhicule cible (2b) se déplacent en groupe, est valide, la section d'exécution (21), dans l'opération de suivi de vitesse automatique, exécute :
un premier mode de fonctionnement dans lequel la relation de position longitudinale est ajustée pour avoir une tendance de rapprochement exécutant un processus de réglage de référence dans lequel un intervalle de temps de dépassement entre le véhicule ego (1) et le véhicule cible (2b) est réglé sur un intervalle de temps de dépassement de référence pour commander la relation de position longitudinale entre le véhicule ego (1) et le véhicule cible (2b) de façon qu'une distance entre le véhicule ego (1) et le véhicule cible (2b) dans la direction avant-arrière devienne une distance cible de référence ; et
un second mode de fonctionnement dans lequel la relation de position longitudinale est ajustée pour avoir une tendance de séparation exécutant un processus d'ajustement d'intervalle de temps de dépassement dans lequel un intervalle de temps de dépassement ajusté qui est supérieur à l'intervalle de temps de dépassement de référence est réglé pour commander la relation de position longitudinale entre le véhicule ego (1) et le véhicule cible (2b) de façon que la distance entre le véhicule ego (1) et le véhicule cible (2b) dans la direction avant-arrière devienne une distance cible augmentée, supérieure à la distance cible de référence qui est la distance entre le véhicule ego (1) et l'autre véhicule (2b) dans la direction avant-arrière, et
la section d'exécution (21) exécute le premier mode de fonctionnement et le second mode de fonctionnement sur la base des informations de relation de position latérale.
